# EUROPEAN PATENT APPLICATION

(11) **EP 4 338 626 A1**
(43) Date of publication of application: **20.03.2024**
(21) Application number: 22807117.1
(22) Date of filing: 04.03.2022
(51) Int. Cl.: A24F 40/53, A24F 40/90

(54) **POWER SUPPLY UNIT FOR AEROSOL GENERATION DEVICE**

(30) Priority: 10.05.2021 JP 2021079906
(71) Applicant: Japan Tobacco, Inc., Tokyo, 105-6927 (JP)
(72) Inventor: AOYAMA, Tatsunari, Tokyo 130-8603 (JP); KAWANAGO, Hiroshi, Tokyo 130-8603 (JP); NAGAHAMA, Toru, Tokyo 130-8603 (JP); FUJIKI, Takashi, Tokyo 130-8603 (JP); YOSHIDA, Ryo, Tokyo 130-8603 (JP)
(74) Representative: Hoffmann Eitle
(86) International application number: PCT/JP2022/009474
(87) International publication number: WO 2022/239410

(57) **Abstract**

A power supply unit for an aerosol generation device is provided that has enhanced functionality. An inhaler (100) is provided with: a heater connector Cn to which a heater HTR for heating a rod (500) by consuming power supplied from a power supply BAT is connected; an MCU 1 configured to be able to control the supply of power from the power supply BAT to the heater HTR, and including a power supply terminal VDD; a switch driver (7) capable of re-starting the MCU 1; and an FF 16 including a power supply terminal VCC. The power supply terminal VDD of the MCU 1 can be supplied with a system power supply voltage Vcc2 generated from the power supply BAT. Even when the MCU 1 is being restarted by the switch driver (7), the power supply terminal VCC of the FF 16 is supplied with a system power supply voltage Vcc1 generated from the power supply BAT.

## Description

### TECHNICAL FIELD

The present invention relates to a power supply unit of an aerosol generation device.

### BACKGROUND ART

Patent Literature 1 describes an electronic inhalation device capable of returning variables and parameters changed by a user to a state at the time of factory shipment by a reset operation.

Patent Literature 2 describes necessity of pressing a reset button in an e-cigarette when an error condition is given to a user via a user interface.

Patent Literature 3 describes an aerosol generation device that executes a reset (initialization setting) operation by pressing a button for a long time.

Patent Literature 4 describes an aerosol delivery device that is automatically reset when a state continues in which a control component or software running on the control component is unstable.

Patent Literature 5 describes that an electronic cigarette is reset by a smartphone capable of communicating with the electronic cigarette.

Patent Literature 6 describes that an inhaling device is permanently disabled until a reset procedure is carried out.

Patent Literature 7 describes an apparatus for providing maintenance services for a smoking device. The apparatus is capable of performing a software reset of the smoking device.

### CITATION LIST

### PATENT LITERATURE

[Patent Literature 1] JP2019-187428A
[Patent Literature 2] JP2020-518250A
[Patent Literature 3] JP2020-527053A
[Patent Literature 4] JP2020-527945A
[Patent Literature 5] JP6770579B
[Patent Literature 6] JP2017-538408A
[Patent Literature 7] JP6752220B

### SUMMARY OF INVENTION

### TECHNICAL PROBLEM

An object of the invention is to provide a power supply unit of an aerosol generation device that can make the aerosol generation device high in functionality.

### SOLUTION TO PROBLEM

A power supply unit of an aerosol generation device according to an aspect of the invention includes: a power supply; a heater connector to which a heater configured to heat an aerosol source by consuming power supplied from the power supply is connected; a controller configured to control supply of power from the power supply to the heater and including a power supply terminal to which power for operation is input; a restart circuit configured to restart the controller; and an IC including the power supply terminal to which the power for operation is input and that is separated from the controller, in which the power supply terminal of the controller is supplied with a second system voltage generated from the power supply, and the power supply terminal of the IC is supplied with a first system voltage generated from the power supply even while the controller is restarted by the restart circuit.

### ADVANTAGEOUS EFFECTS OF INVENTION

According to the invention, it is possible to provide a power supply unit of an aerosol generation device that can make the aerosol generation device high in functionality.

### BRIEF DESCRIPTION OF DRAWINGS

[FIG. 1] FIG. 1 is a perspective view of a non-combustion inhaler.
[FIG. 2] FIG. 2 is a perspective view of the non-combustion inhaler in a state where a rod is attached.
[FIG. 3] FIG. 3 is another perspective view of the non-combustion inhaler.
[FIG. 4] FIG. 4 is an exploded perspective view of the non-combustion inhaler.
[FIG. 5] FIG. 5 is a perspective view of an internal unit of the non-combustion inhaler.
[FIG. 6] FIG. 6 is an exploded perspective view of the internal unit in FIG. 5.
[FIG. 7] FIG. 7 is a perspective view of an internal unit from which a power supply and a chassis are detached.
[FIG. 8] FIG. 8 is another perspective view of the internal unit from which the power supply and the chassis are detached.
[FIG. 9] FIG. 9 is a schematic diagram illustrating operation modes of the inhaler.
[FIG. 10] FIG. 10 is a diagram illustrating a schematic configuration of an electric circuit of the internal unit.
[FIG. 11] FIG. 11 is a diagram illustrating a schematic configuration of the electric circuit of the internal unit.
[FIG. 12] FIG. 12 is a diagram illustrating a schematic configuration of the electric circuit of the internal unit.
[FIG. 13] FIG. 13 is a diagram illustrating an operation of the electric circuit in a sleep mode.
[FIG. 14] FIG. 14 is a diagram illustrating an operation of the electric circuit in an active mode.
[FIG. 15] FIG. 15 is a diagram illustrating an operation of the electric circuit in a heating initial setting mode.
[FIG. 16] FIG. 16 is a diagram illustrating an operation of the electric circuit during heating by a heater in a heating mode.
[FIG. 17] FIG. 17 is a diagram illustrating an operation of the electric circuit when a temperature of the heater is detected in the heating mode.
[FIG. 18] FIG. 18 is a diagram illustrating an operation of the electric circuit in a charging mode.
[FIG. 19] FIG. 19 is a diagram illustrating an operation of the electric circuit when an MCU is reset (restarted).
[FIG. 20] FIG. 20 is a diagram illustrating a schematic configuration inside a charging IC.
[FIG. 21] FIG. 21 is a circuit diagram of main parts of the electric circuit illustrated in FIG. 10 with main electronic components related to a reset operation extracted.
[FIG. 22] FIG. 22 is a cross-sectional view taken along a section passing through a case thermistor of the inhaler illustrated in FIG. 1.

### DESCRIPTION OF EMBODIMENTS

Hereinafter, an inhaling system as an embodiment of an aerosol generation device according to the invention will be described with reference to the drawings. The inhaling system includes a non-combustion inhaler 100 (hereinafter, also simply referred to as an "inhaler 100") which is an embodiment of a power supply unit according to the invention, and a rod 500 heated by the inhaler 100. In the following description, a configuration is described as an example in which the inhaler 100 accommodates a heating unit in a detachable manner. However, the heating unit may be detachable from the inhaler 100. For example, a unit in which the rod 500 and the heating unit are integrated may be detachably attached to the inhaler 100. That is, a power supply unit of the aerosol generation device may not include the heating unit as a component. The term "detachable" refers to a mode in which detachment cannot be performed as long as intended use. Alternatively, an induction heating coil provided in the inhaler 100 and a susceptor built in the rod 500 may cooperate to constitute the heating unit.

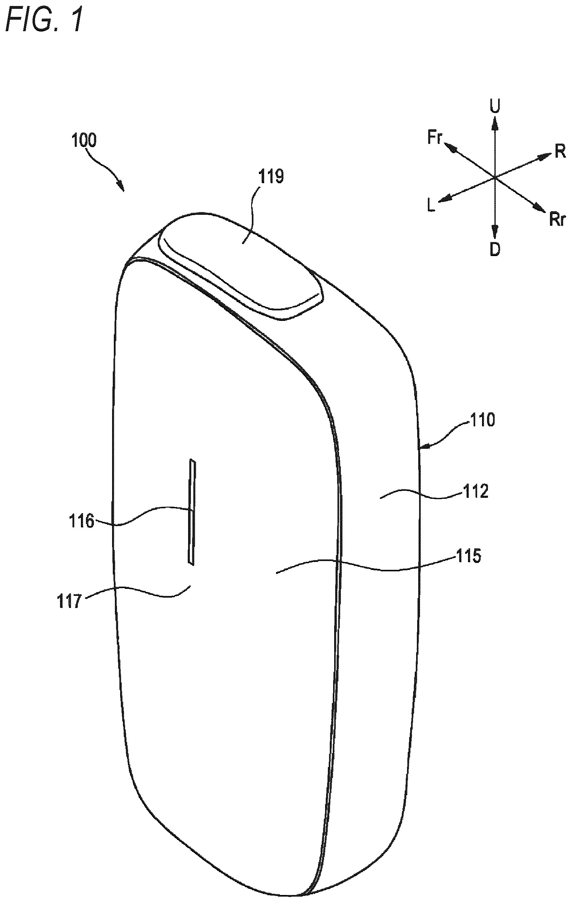

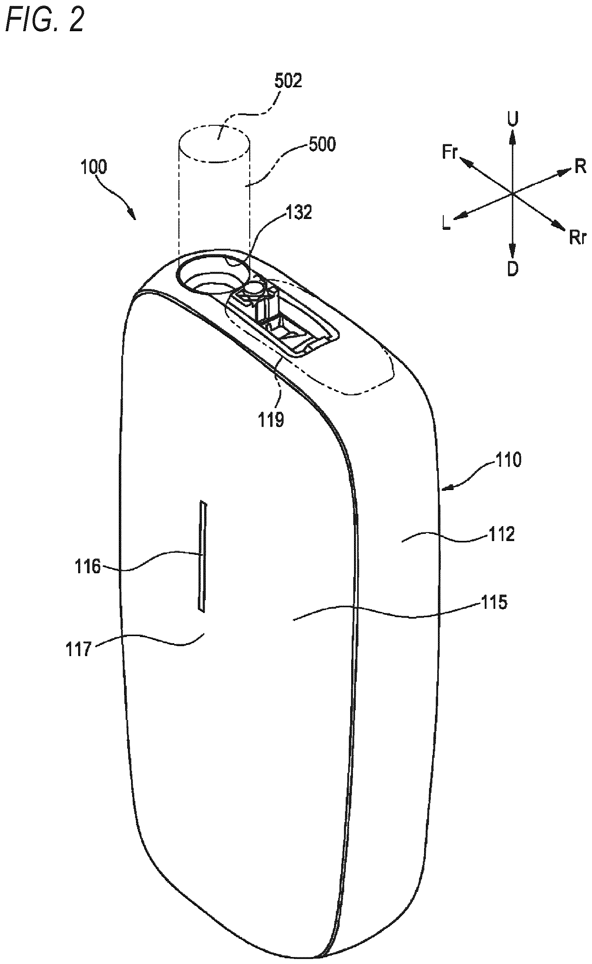

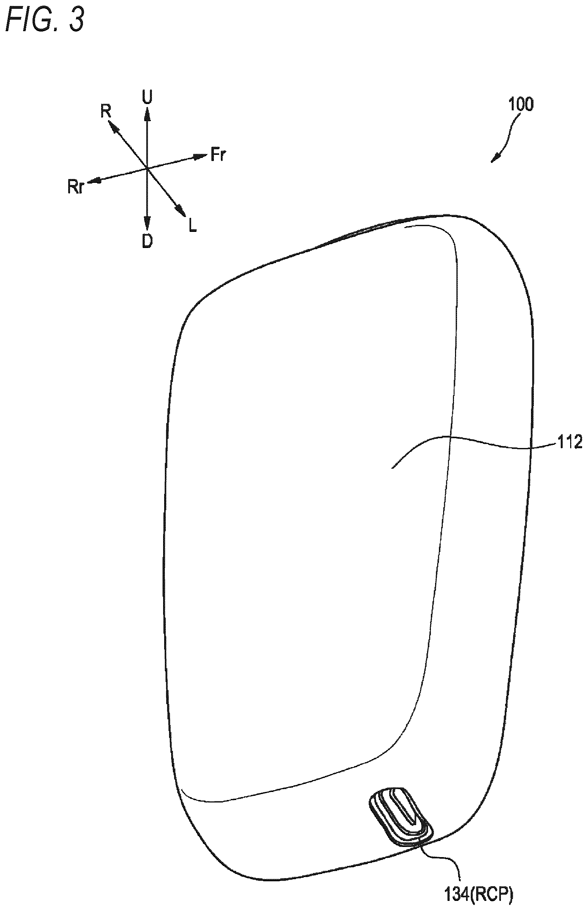

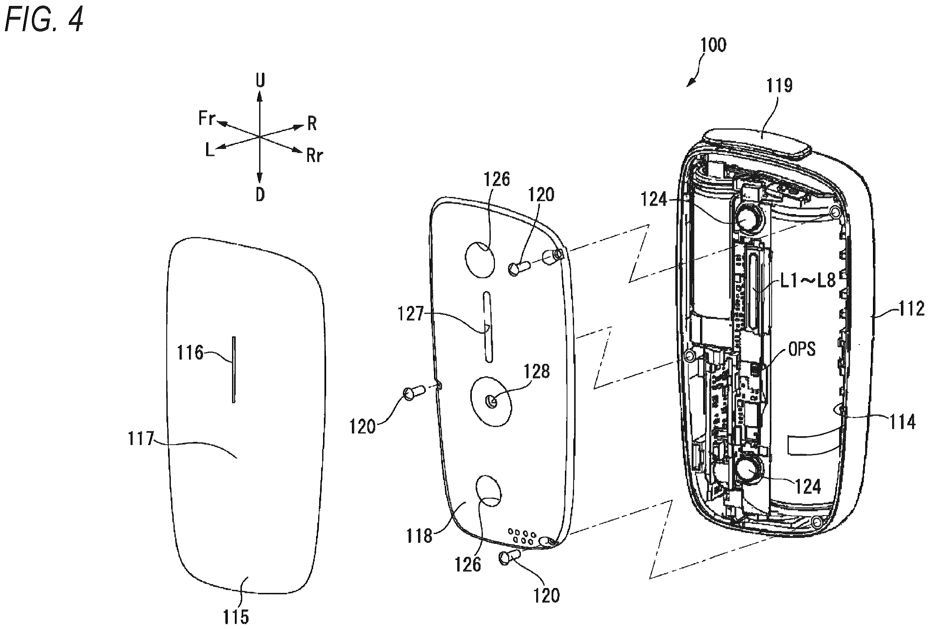

FIG. 1 is a perspective view illustrating an overall configuration of the inhaler 100. FIG. 2 is a perspective view of the inhaler 100 in a state where the rod 500 is attached. FIG. 3 is another perspective view of the inhaler 100. FIG. 4 is an exploded perspective view of the inhaler 100. In the following description, the invention will be described using an orthogonal coordinate system of a three-dimensional space in which three directions orthogonal to one another are defined as a front-rear direction, a left-right direction, and an up-down direction. In the drawings, a front side is denoted by Fr, a rear side is denoted by Rr, a right side is denoted by R, a left side is denoted by L, an upper side is denoted by U, and a lower side is denoted by D.

The inhaler 100 is configured to generate a flavor-containing aerosol by heating an elongated substantially cylindrical rod 500 (see FIG. 2) as an example of a flavor component generation base material including a filler containing an aerosol source and a flavor source.

### <Flavor Component Generation Base Material (Rod)>

The rod 500 includes a filler containing an aerosol source that is heated at a predetermined temperature to produce an aerosol.

The type of aerosol source is not particularly limited, and an extract substance from various natural products and/or a constituent component thereof can be selected depending on an application. The aerosol source may be solid or liquid, for example, polyhydric alcohols such as glycerin, propylene glycol, or water. The aerosol source may include a flavor source such as a tobacco raw material for releasing a flavor component by heating and an extract derived from the tobacco raw material. The gas to which the flavor component is added is not limited to the aerosol, and for example, invisible steam may be generated.

The filler of the rod 500 may contain cut tobacco as the flavor source. Materials for the cut tobacco are not particularly limited, and known materials such as lamina and backbone can be used. The filler may contain one kind or two or more kinds of fragrance. The type of the fragrance is not particularly limited, and is preferably menthol from the viewpoint of imparting good taste. The flavor source may contain a plant other than tobacco (for example, mint, Chinese medicine, or herb). Depending on the application, the rod 500 may not contain a flavor source

### <Overall Configuration of Non-combustion Inhaler>

Next, the overall configuration of the inhaler 100 will be described with reference to FIGS. 1 to 4.

The inhaler 100 includes a substantially rectangular parallelepiped case 110 having a front surface, a rear surface, a left surface, a right surface, an upper surface, and a lower surface. The case 110 includes a bottomed tubular case body 112 in which the front surface, the rear surface, the upper surface, the lower surface, and the right surface are integrally formed, an outer panel 115 and an inner panel 118 that seal an opening 114 (see FIG. 4) of the case body 112 to form the left surface, and a slider 119.

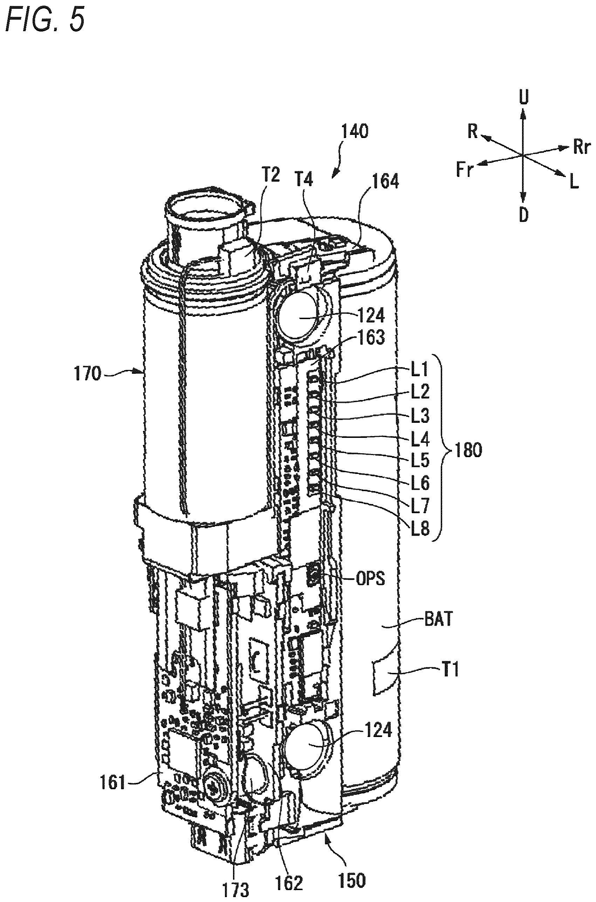

The inner panel 118 is fixed to the case body 112 with bolts 120. The outer panel 115 is fixed to the case body 112 so as to cover an outer surface of the inner panel 118 by magnets 124 held by a chassis 150 (to be described later) (see FIG. 5) that is housed in the case body 112. The outer panel 115 is fixed by the magnets 124, so that a user can replace the outer panel 115 as desired.

The inner panel 118 is provided with two through holes 126 through which the magnets 124 pass. The inner panel 118 is further provided with a vertically long hole 127 and a circular round hole 128 between the two vertically arranged through holes 126. The long hole 127 transmits light emitted from eight LEDs (Light Emitting Diodes) L1 to L8 built in the case body 112. A button-type operation switch OPS built in the case body 112 penetrates the round hole 128. Accordingly, the user can detect the light emitted from the eight LEDs L1 to L8 through a LED window 116 of the outer panel 115. The user can press down the operation switch OPS via a pressing portion 117 of the outer panel 115.

As illustrated in FIG. 2, an opening 132 into which the rod 500 can be inserted is provided on an upper surface of the case body 112. The slider 119 is coupled to the case body 112 to be movable in the front-rear direction between a position where the opening 132 is closed (see FIG. 1) and a position where the opening 132 is opened (see FIG. 2).

The operation switch OPS is used to perform various operations of the inhaler 100. For example, the user operates the operation switch OPS via the pressing portion 117 in a state where the rod 500 is inserted into the opening 132 and attached as illustrated in FIG. 2. Accordingly, a heating unit 170 (see FIG. 5) heats the rod 500 without burning the rod 500. When the rod 500 is heated, an aerosol is generated from the aerosol source contained in the rod 500, and the flavor of the flavor source contained in the rod 500 is added to the aerosol. The user can inhale the aerosol containing the flavor by holding a mouthpiece 502 of the rod 500 protruding from the opening 132 to inhale.

As illustrated in FIG. 3, a charging terminal 134 that is electrically connected to an external power supply such as an outlet or a mobile battery and receives power supply is provided on a lower surface of the case body 112. In the present embodiment, the charging terminal 134 is a USB (universal serial bus) Type-C receptacle, but is not limited thereto. Hereinafter, the charging terminal 134 will also be referred to as a receptacle RCP.

The charging terminal 134 may include, for example, a power receiving coil, and may wirelessly receive power transmitted from the external power supply. In this case, a method of power transfer (Wireless Power Transfer) may be an electromagnetic induction type, a magnetic resonance type, or a combination of the electromagnetic induction type and the magnetic resonance type. As another example, the charging terminal 134 may be connectable to various USB terminals or the like, and may include the above-described power receiving coil.

A configuration of the inhaler 100 illustrated in FIGS. 1 to 4 is merely an example. The inhaler 100 can be implemented in various forms in which the rod 500 is held and applied with an action such as heating to generate a gas to which a flavor component is added from the rod 500, and the user can inhale the generated gas.

### <Internal Configuration of Non-combustion Inhaler>

An internal unit 140 of the inhaler 100 will be described with reference to FIGS. 5 to 8.

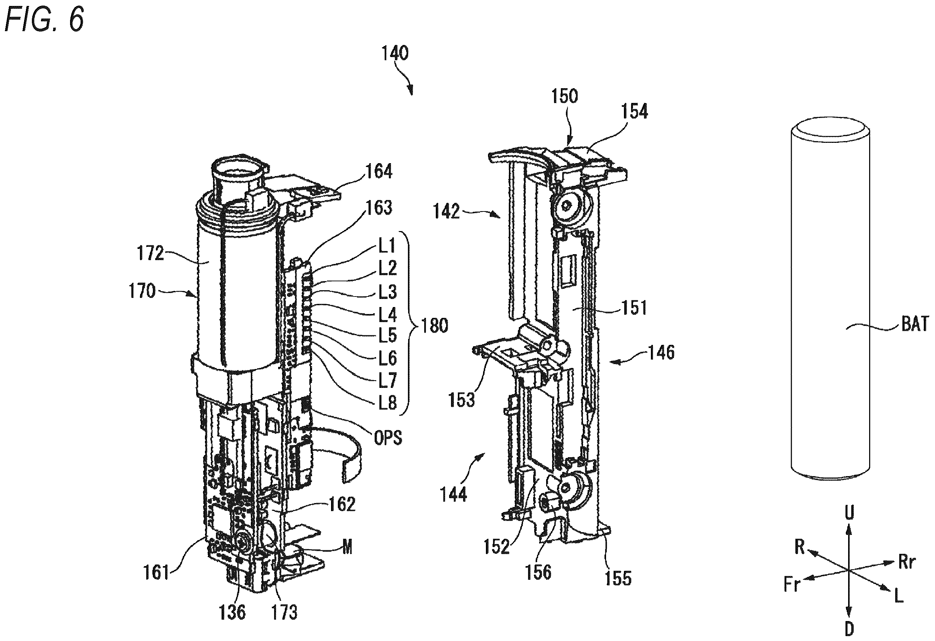

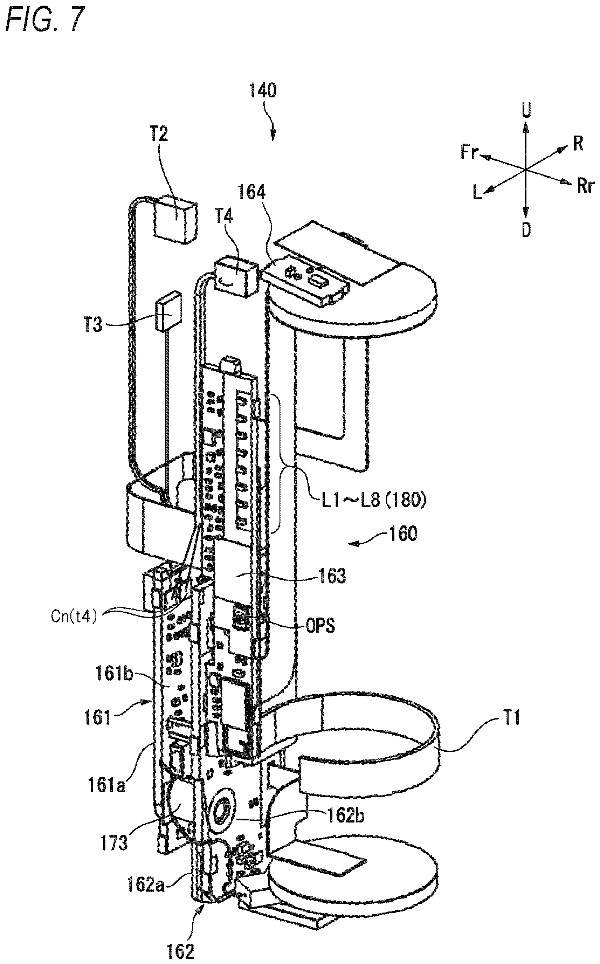

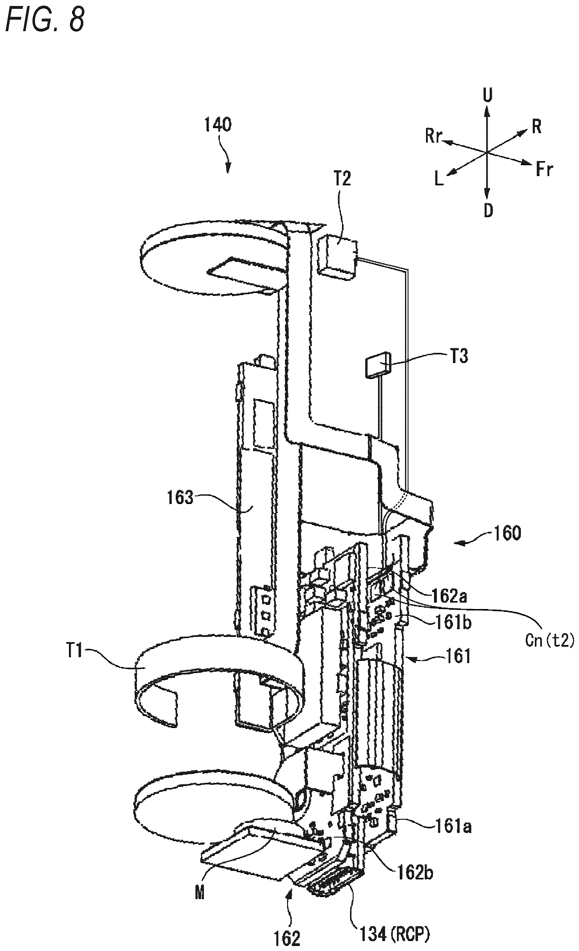

FIG. 5 is a perspective view of the internal unit 140 of the inhaler 100. FIG. 6 is an exploded perspective view of the internal unit 140 in FIG. 5. FIG. 7 is a perspective view of the internal unit 140 from which a power supply BAT and the chassis 150 are detached. FIG. 8 is another perspective view of the internal unit 140 from which the power supply BAT and the chassis 150 are detached.

The internal unit 140 accommodated in an internal space of the case 110 includes the chassis 150, the power supply BAT, a circuit unit 160, the heating unit 170, a notification unit 180, and various sensors.

The chassis 150 includes a plate-shaped chassis body 151 that is disposed substantially in a center of the internal space of the case 110 in the front-rear direction and that extends in the up-down direction and the front-rear direction, a plate-shaped front-rear partition wall 152 that is disposed substantially in a center of the internal space of the case 110 in the front-rear direction and that extends in the up-down direction and the left-right direction, a plate-shaped up-down partition wall 153 that extends forward from substantially a center of the front-rear partition wall 152 in the up-down direction, a plate-shaped chassis upper wall 154 that extends rearward from upper edge portions of the front-rear partition wall 152 and the chassis body 151, and a plate-shaped chassis lower wall 155 that extends rearward from lower edge portions of the front-rear partition wall 152 and the chassis body 151. A left surface of the chassis body 151 is covered with the inner panel 118 and the outer panel 115 of the case 110 described above.

By the chassis 150, a heating unit accommodating region 142 is defined and formed in a front upper portion of the internal space of the case 110, a board accommodating region 144 is defined and formed in a front lower portion thereof, and a power supply accommodating space 146 is defined and formed in a rear portion thereof in the up-down direction.

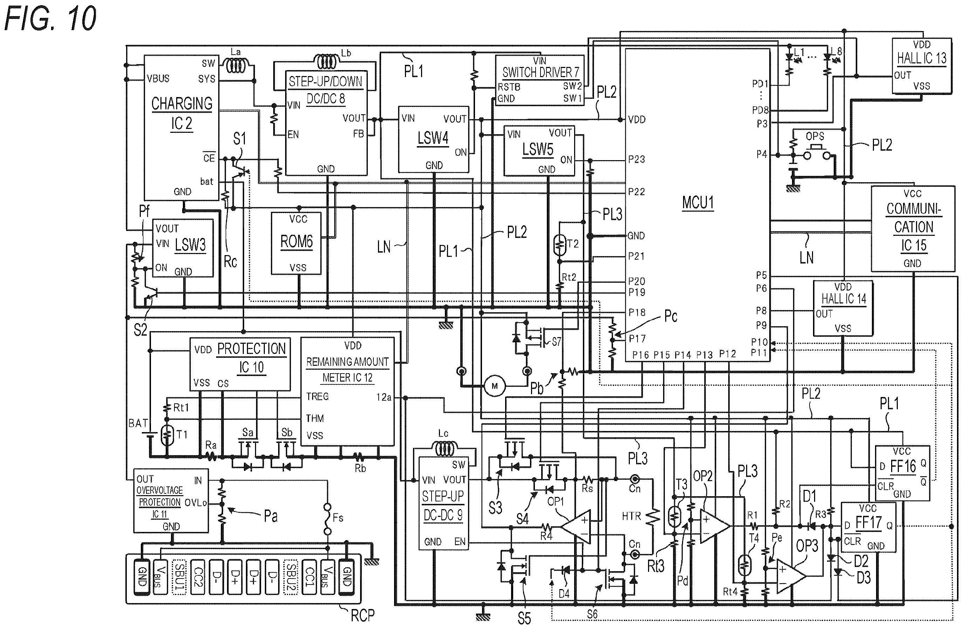

The heating unit 170 accommodated in the heating unit accommodating region 142 is constituted by a plurality of tubular members, and these tubular members are concentrically disposed to form a tubular body as a whole. The heating unit 170 includes a rod accommodating unit 172 capable of accommodating a portion of the rod 500 therein, and a heater HTR (see FIGS. 10 to 19) that heats the rod 500 from an outer circumference or a center of the rod 500. Preferably, a surface of the rod accommodating unit 172 is insulated from the heater HTR by forming the rod accommodating unit 172 from a heat-insulating material or providing a heat-insulating material inside the rod accommodating unit 172. The heater HTR may be any element capable of heating the rod 500. The heater HTR is, for example, a heating element. Examples of the heating element include a heating resistor, a ceramic heater, and an induction heating heater. As the heater HTR, for example, a heater having a PTC (Positive Temperature Coefficient) characteristic in which a resistance value increases with an increase in temperature is preferably used. Alternatively, a heater HTR having an NTC (Negative Temperature Coefficient) characteristic in which the resistance value decreases with an increase in temperature may be used. The heating unit 170 has a function of defining a flow path of air supplied to the rod 500 and a function of heating the rod 500. The case 110 is formed with a vent (not illustrated) that allows air to flow, and is configured to allow air to flow into the heating unit 170.

The power supply BAT accommodated in the power supply accommodating space 146 is a rechargeable secondary battery, an electric double layer capacitor, or the like, and is preferably a lithium-ion secondary battery. An electrolyte of the power supply BAT may be implemented by one or a combination of a gel electrolyte, an electrolytic solution, a solid electrolyte, and an ionic liquid.

The notification unit 180 notifies various kinds of information such as a SOC (State Of Charge) indicating a charging state of the power supply BAT, a preheating time at the time of inhaling, and an inhaling available period. The notification unit 180 according to the present embodiment includes the eight LEDs L1 to L8 and a vibration motor M. The notification unit 180 may be formed by light-emitting elements such as the LEDs L1 to L8, may be formed by vibration elements such as the vibration motor M, or may be formed by sound output elements. The notification unit 180 may be a combination of two or more elements among the light-emitting elements, the vibration elements, and the sound output elements.

The various sensors include an intake sensor that detects a puff operation (an inhaling operation) of the user, a power supply temperature sensor that detects a temperature of the power supply BAT, a heater temperature sensor that detects a temperature of the heater HTR, a case temperature sensor that detects a temperature of the case 110, a cover position sensor that detects a position of the slider 119, a panel detection sensor that detects attachment or detachment of the outer panel 115, and the like.

The intake sensor mainly includes, for example, a thermistor T2 disposed in the vicinity of the opening 132. The power supply temperature sensor mainly includes, for example, a thermistor T1 disposed in the vicinity of the power supply BAT. The heater temperature sensor mainly includes, for example, a thermistor T3 disposed in the vicinity of the heater HTR. As described above, the rod accommodating unit 172 is preferably insulated from the heater HTR. In this case, it is preferable that the thermistor T3 is in contact with or close to the heater HTR inside the rod accommodating unit 172. When the heater HTR has the PTC characteristic or the NTC characteristic, the heater HTR may be used for the heater temperature sensor. The case temperature sensor mainly includes, for example, a thermistor T4 disposed in the vicinity of a left surface of the case 110. The thermistor T4 is preferably in contact with or close to the case 110. The cover position sensor mainly includes a Hall IC 14 including a Hall element disposed in the vicinity of the slider 119. The panel detection sensor mainly includes a Hall IC 13 including a Hall element disposed in the vicinity of an inner surface of the inner panel 118.

The circuit unit 160 includes four circuit boards, a plurality of ICs (Integrated Circuits), and a plurality of elements. The four circuit boards include an MCU mounting board 161 on which an MCU (Micro Controller Unit) 1 and a charging IC 2 (to be described later) are disposed, a receptacle mounting board 162 on which the charging terminal 134 is mainly disposed, an LED mounting board 163 on which the operation switch OPS, LEDs L1 to L8, and a communication IC 15 to be described later are disposed, and a Hall IC mounting board 164 on which the Hall IC 14 (to be described later) including the Hall element constituting the cover position sensor is disposed.

The MCU mounting board 161 and the receptacle mounting board 162 are disposed in parallel to each other in the board accommodating region 144. Specifically, an element disposition surface of the MCU mounting board 161 and an element disposition surface of the receptacle mounting board 162 are disposed along the left-right direction and the up-down direction, respectively, and the MCU mounting board 161 is disposed in front of the receptacle mounting board 162. The MCU mounting board 161 and the receptacle mounting board 162 are each provided with openings. The MCU mounting board 161 and the receptacle mounting board 162 are fastened to a board fixing unit 156 of the front-rear partition wall 152 with bolts 136 in a state where a cylindrical spacer 173 is interposed between peripheral edge portions of the openings. That is, the spacer 173 fixes positions of the MCU mounting board 161 and the receptacle mounting board 162 inside the case 110, and mechanically connects the MCU mounting board 161 and the receptacle mounting board 162. Accordingly, the MCU mounting board 161 and the receptacle mounting board 162 come into contact with each other, and it is possible to prevent the occurrence of a short-circuit current therebetween.

For the sake of convenience, assuming that the surfaces of the MCU mounting board 161 and the receptacle mounting board 162 facing the front are main surfaces 161a and 162a, respectively, and surfaces opposite to the main surfaces 161a and 162a are secondary surfaces 161b and 162b, respectively, the secondary surface 161b of the MCU mounting board 161 and the main surface 162a of the receptacle mounting board 162 face each other with a predetermined gap therebetween. The main surface 161a of the MCU mounting board 161 faces the front surface of the case 110, and the secondary surface 162b of the receptacle mounting board 162 faces the front-rear partition wall 152 of the chassis 150. Elements and ICs mounted on the MCU mounting board 161 and the receptacle mounting board 162 will be described later.

The LED mounting board 163 is disposed on a left side surface of the chassis body 151 and between the two magnets 124 disposed vertically. An element disposition surface of the LED mounting board 163 is disposed along the up-down direction and the front-rear direction. In other words, the element disposition surfaces of the MCU mounting board 161 and the receptacle mounting board 162 are orthogonal to the element disposition surface of the LED mounting board 163. In this way, the element disposition surfaces of the MCU mounting board 161 and the receptacle mounting board 162 and the element disposition surface of the LED mounting board 163 are not limited to being orthogonal to each other, and preferably intersect (are not parallel to) each other. The LEDs L1 to L8 and the vibration motor M constituting the notification unit 180 are fixed to a lower surface of the chassis lower wall 155 and electrically connected to the MCU mounting board 161.

The Hall IC mounting board 164 is disposed on an upper surface of the chassis upper wall 154.

### <Operation Modes of Inhaler>

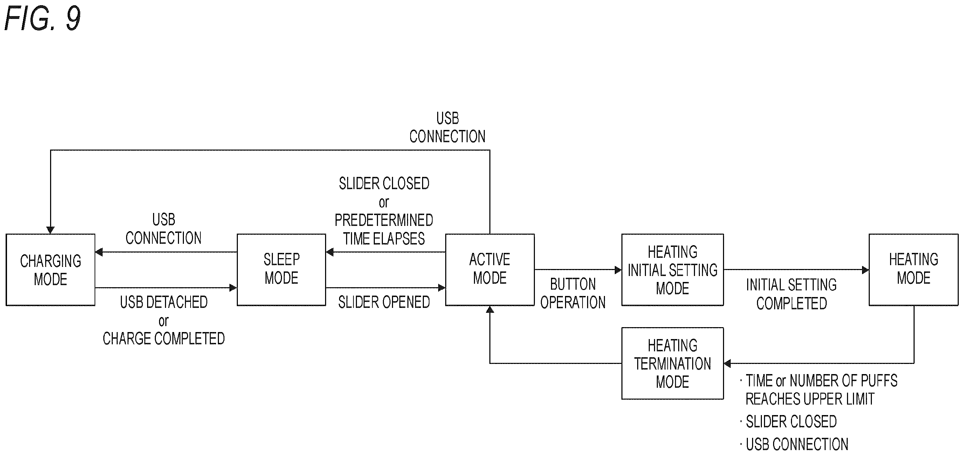

FIG. 9 is a schematic diagram illustrating operation modes of the inhaler 100. As illustrated in FIG. 9, the operation modes of the inhaler 100 include a charging mode, a sleep mode, an active mode, a heating initial setting mode, a heating mode, and a heating termination mode.

The sleep mode is a mode in which power supply to an electronic component mainly required for heating control of the heater HTR is stopped to save power.

The active mode is a mode in which most of the functions other than the heating control of the heater HTR are enabled. When the slider 119 is opened in a state where the inhaler 100 is operating in the sleep mode, the operation mode is switched to the active mode. When the slider 119 is closed or a non-operation time of the operation switch OPS reaches a predetermined time in a state where the inhaler 100 is operating in the active mode, the operation mode is switched to the sleep mode.

The heating initial setting mode is a mode in which an initial setting such as a control parameter for starting the heating control of the heater HTR is performed. When an operation of the operation switch OPS is detected in a state where the inhaler 100 is operating in the active mode, the operation mode is switched to the heating initial setting mode, and when the initial setting is terminated, the operation mode is switched to the heating mode.

The heating mode is a mode in which the heating control of the heater HTR (a heating control for aerosol generation and a heating control for temperature detection) is executed. When the operation mode is switched to the heating mode, the inhaler 100 starts the heating control of the heater HTR.

The heating termination mode is a mode in which a termination process (a storage process of heating history and the like) of the heating control of the heater HTR is executed. In a state where the inhaler 100 is operating in the heating mode, when an energization time to the heater HTR or the number of times of inhalation by the user reaches an upper limit or the slider 119 is closed, the operation mode is switched to the heating termination mode, and when the termination process is terminated, the operation mode is switched to the active mode. When USB connection is established in a state where the inhaler 100 is operating in the heating mode, the operation mode is switched to the heating termination mode, and when the termination process is terminated, the operation mode is switched to the charging mode. As illustrated in FIG. 9, in this case, the operation mode may be switched to the active mode before the operation mode is switched to the charging mode. In other words, when the USB connection is established in a state where the inhaler 100 is operating in the heating mode, the operation mode may be switched in the order of the heating termination mode, the active mode, and the charging mode.

The charging mode is a mode in which the power supply BAT is charged with power supplied from an external power supply connected to the receptacle RCP. When the external power supply is connected (USB connection) to the receptacle RCP in a state where the inhaler 100 is operating in the sleep mode or the active mode, the operation mode is switched to the charging mode. When the charging of the power supply BAT is completed or the connection between the receptacle RCP and the external power supply is released in a state where the inhaler 100 is operating in the charging mode, the operation mode is switched to the sleep mode.

### <Overview of Circuit of Internal Unit>

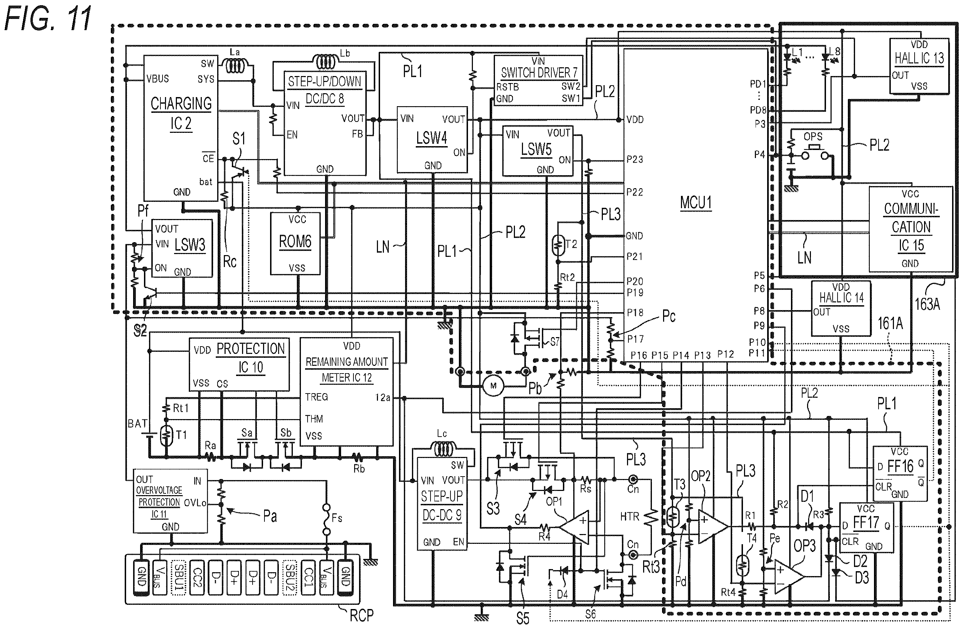

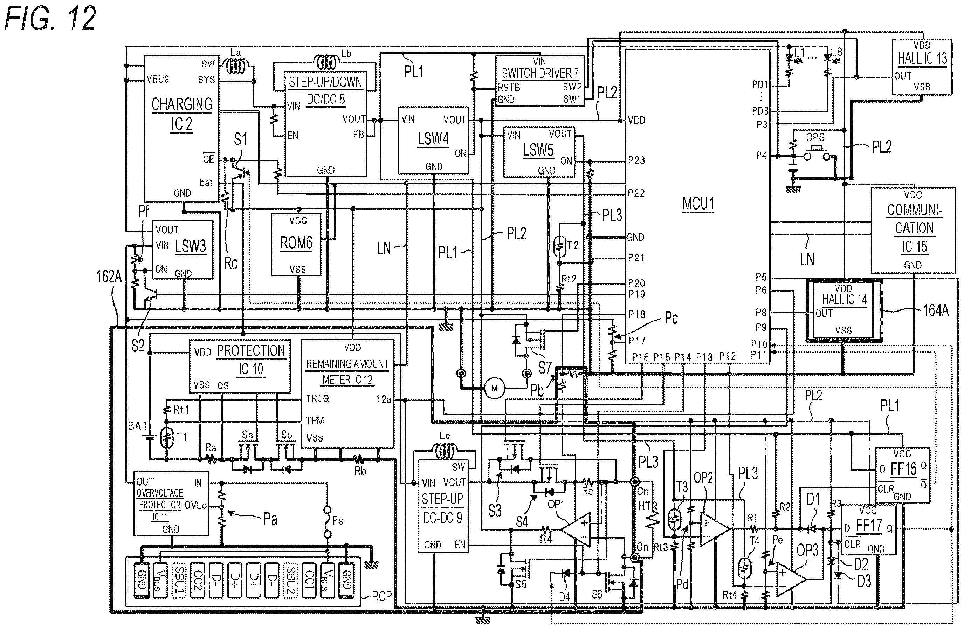

FIGS. 10, 11, and 12 are diagrams illustrating a schematic configuration of an electric circuit of the internal unit 140. FIG. 11 is the same as FIG. 10 except that a range 161A (a range surrounded by a thick broken line) mounted on the MCU mounting board 161 and a range 163A (range surrounded by a thick solid line) mounted on the LED mounting board 163 are added in the electric circuit illustrated in FIG. 10. FIG. 12 is the same as FIG. 10 except that a range 162A mounted on the receptacle mounting board 162 and a range 164A mounted on the Hall IC mounting board 164 are added in the electric circuit illustrated in FIG. 10.

A wiring indicated by a thick solid line in FIG. 10 is a wiring having the same potential as a reference potential (a ground potential) of the internal unit 140 (a wiring connected to a ground provided in the internal unit 140), and this wiring is hereinafter referred to as a ground line. In FIG. 10, an electronic component in which a plurality of circuit elements are chipped is indicated by a rectangle, and symbols of various terminals are written inside the rectangle. Power supply terminals VCC and power supply terminals VDD mounted on the chips indicate power supply terminals on a high potential side. Power supply terminals VSS and ground terminals GND mounted on the chips indicate power supply terminals on a low potential side (a reference potential side). In the chipped electronic component, a power supply voltage is a difference between a potential of the power supply terminal on the high potential side and a potential of the power supply terminal on the low potential side. The chipped electronic component uses the power supply voltage to execute various functions.

As illustrated in FIG. 11, the MCU mounting board 161 (a range 161A) is provided with, as main electronic components, the MCU 1 that integrally controls the entire inhaler 100, the charging IC 2 that executes charging control of the power supply BAT, load switches (hereinafter, referred to as LSW) 3, 4, and 5 each formed by combining a capacitor, a resistor, a transistor, and the like, a ROM (Read Only Memory) 6, a switch driver 7, a step-up/down DC/DC converter 8 (illustrated as a step-up/down DC/DC 8 in the drawing), an operational amplifier OP2, an operational amplifier OP3, flip-flops (hereinafter, FF) 16 and 17, a connector Cn (t2) (illustrated as the thermistor T2 connected to the connector in the drawing) electrically connected to the thermistor T2 constituting the intake sensor, a connector Cn (t3) (illustrated as the thermistor T3 connected to the connector in the drawing) electrically connected to the thermistor T3 constituting the heater temperature sensor, a connector Cn (t4) (illustrated as the thermistor T4 connected to the connector in the drawing) electrically connected to the thermistor T4 constituting the case temperature sensor, and a voltage dividing circuit Pc for USB connection detection.

The ground terminal GND of each of the charging IC 2, LSW3, LSW4, LSW5, the switch driver 7, the step-up/down DC/DC converter 8, the FF 16, and the FF 17 is connected to the ground line. The power supply terminal VSS of the ROM 6 is connected to the ground line. Negative power supply terminals of the operational amplifier OP2 and the operational amplifier OP3 are connected to the ground line.

As illustrated in FIG. 11, the LED mounting board 163 (a range 163A) is provided with, as main electronic components, the Hall IC 13 including the Hall element constituting the panel detection sensor, the LEDs L1 to L8, the operation switch OPS, and the communication IC 15. The communication IC 15 is a communication module for communicating with an electronic device such as a smartphone. The power supply terminal VSS of the Hall IC 13 and the ground terminal GND of the communication IC 15 are connected to the ground line. The communication IC 15 and the MCU 1 are capable of communicating with each other via a communication line LN. One end of the operation switch OPS is connected to the ground line, and the other end of the operation switch OPS is connected to a terminal P4 of the MCU 1.

As illustrated in FIG. 12, the receptacle mounting board 162 (a range 162A) is provided with, as main electronic components, a power supply connector (illustrated as the power supply BAT connected to the power supply connector in the drawing) electrically connected to the power supply BAT, a connector (illustrated as the thermistor T1 connected to the connector in the drawing) electrically connected to the thermistor T1 constituting the power supply temperature sensor, a step-up DC/DC converter 9 (illustrated as a step-up DC/DC 9 in the drawing), a protection IC 10, an overvoltage protection IC 11, a remaining amount meter IC 12, the receptacle RCP, switches S3 to S6 formed of MOSFETs, an operational amplifier OP1, and a pair of heater connectors Cn (a positive electrode side and a negative electrode side) electrically connected to the heater HTR.

The two ground terminals GND of the receptacle RCP, the ground terminal GND of the step-up DC/DC converter 9, the power supply terminal VSS of the protection IC 10, the power supply terminal VSS of the remaining amount meter IC 12, the ground terminal GND of the overvoltage protection IC 11, and a negative power supply terminal of the operational amplifier OP1 are connected to the ground line.

As illustrated in FIG. 12, the Hall IC mounting board 164 (a range 164A) is provided with the Hall IC 14 including the Hall element constituting the cover position sensor. The power supply terminal VSS of the Hall IC 14 is connected to the ground line. An output terminal OUT of the Hall IC 14 is connected to a terminal P8 of the MCU 1. The MCU 1 detects the opening and closing of the slider 119 based on a signal input to the terminal P8.

As illustrated in FIG. 11, a connector electrically connected to the vibration motor M is provided on the MCU mounting board 161.

### <Details of Circuit of Internal Unit>

Connection relation between the electronic components and the like will be described below with reference to FIG. 10.

Each of two power supply input terminals V_{BUS} of the receptacle RCP is connected to an input terminal IN of the overvoltage protection IC 11 via a fuse Fs. When a USB plug is connected to the receptacle RCP and a USB cable including the USB plug is connected to the external power supply, a USB voltage V_{USB} is supplied to the two power supply input terminals V_{BUS} of the receptacle RCP.

One end of a voltage dividing circuit Pa including a series circuit of two resistors is connected to the input terminal IN of the overvoltage protection IC 11. The other end of the voltage dividing circuit Pa is connected to the ground line. A connection point of the two resistors constituting the voltage dividing circuit Pa is connected to a voltage detection terminal OVLo of the overvoltage protection IC 11. In a state where a voltage input to the voltage detection terminal OVLo is less than a threshold, the overvoltage protection IC 11 outputs a voltage input to the input terminal IN from the output terminal OUT. When the voltage input to the voltage detection terminal OVLo is equal to or higher than the threshold (overvoltage), the overvoltage protection IC 11 stops the voltage output from the output terminal OUT (disconnects electrical connection between the LSW3 and the receptacle RCP), so that the electronic components downstream of the overvoltage protection IC 11 are protected. The output terminal OUT of the overvoltage protection IC 11 is connected to an input terminal VIN of the LSW3 and one end of the voltage dividing circuit Pc (a series circuit of two resistors) connected to the MCU 1. The other end of the voltage dividing circuit Pc is connected to the ground line. A connection point of the two resistors constituting the voltage dividing circuit Pc is connected to a terminal P17 of the MCU 1.

One end of a voltage dividing circuit Pf including a series circuit of two resistors is connected to the input terminal VIN of the LSW3. The other end of the voltage dividing circuit Pf is connected to the ground line. A connection point of the two resistors constituting the voltage dividing circuit Pf is connected to a control terminal ON of the LSW3. A collector terminal of a bipolar transistor S2 is connected to the control terminal ON of the LSW3. An emitter terminal of the bipolar transistor S2 is connected to the ground line. A base terminal of the bipolar transistor S2 is connected to a terminal P19 of the MCU 1. When a signal input to the control terminal ON is at a high level, the LSW3 outputs, from an output terminal VOUT, a voltage input to the input terminal VIN. The output terminal VOUT of the LSW3 is connected to an input terminal VBUS of the charging IC 2. While the USB connection is not established, the MCU 1 turns on the bipolar transistor S2. Accordingly, since the control terminal ON of the LSW3 is connected to the ground line via the bipolar transistor S2, a low-level signal is input to the control terminal ON of the LSW3.

When the USB connection is established, the MCU 1 turns off the bipolar transistor S2 connected to the LSW3. When the bipolar transistor S2 is turned off, the USB voltage V_{USB} obtained by dividing the voltage by the voltage dividing circuit Pf is input to the control terminal ON of the LSW3. Therefore, when the USB connection is established and the bipolar transistor S2 is turned off, a high-level signal is input to the control terminal ON of the LSW3. Accordingly, the LSW3 outputs, from the output terminal VOUT, the USB voltage V_{USB} supplied from the USB cable. Even when the USB connection is established in a state where the bipolar transistor S2 is not turned off, the control terminal ON of the LSW3 is connected to the ground line via the bipolar transistor S2. Therefore, unless the MCU 1 turns off the bipolar transistor S2, a low-level signal is continuously input to the control terminal ON of the LSW3.

A positive electrode terminal of the power supply BAT is connected to the power supply terminal VDD of the protection IC 10, the input terminal VIN of the step-up DC/DC converter 9, and a charging terminal bat of the charging IC 2. Therefore, a power supply voltage V_{BAT} of the power supply BAT is supplied to the protection IC 10, the charging IC 2, and the step-up DC/DC converter 9. A resistor Ra, a switch Sa formed of a MOSFET, a switch Sb formed of a MOSFET, and a resistor Rb are connected in series in this order to a negative electrode terminal of the power supply BAT. A current detection terminal CS of the protection IC 10 is connected to a connection point of the resistor Ra and the switch Sa. Control terminals of the switches Sa and Sb are connected to the protection IC 10. Both ends of the resistor Rb are connected to the remaining amount meter IC 12.

The protection IC 10 acquires a value of a current flowing through the resistor Ra during charging and discharging of the power supply BAT from a voltage input to the current detection terminal CS. When the value of the current becomes excessive (overcurrent), the protection IC 10 controls opening and closing of the switch Sa and the switch Sb to stop charging or discharging the power supply BAT, thereby protecting the power supply BAT. More specifically, when the excessive value of the current is acquired during charging of the power supply BAT, the protection IC 10 turns off the switch Sb to stop charging the power supply BAT. When the excessive value of the current is acquired during discharging of the power supply BAT, the protection IC 10 turns off the switch Sa to stop discharging the power supply BAT. When a voltage value of the power supply BAT is abnormal (overcharge or overvoltage) from the voltage input to the power supply terminal VDD, the protection IC 10 controls opening and closing of the switch Sa and the switch Sb to stop charging or discharging the power supply BAT, thereby protecting the power supply BAT. More specifically, when overcharging of the power supply BAT is detected, the protection IC 10 turns off the switch Sb to stop charging the power supply BAT. When over-discharge of the power supply BAT is detected, the protection IC 10 turns off the switch Sa to stop discharging the power supply BAT.

A resistor Rt1 is connected to a connector connected to the thermistor T1 disposed in the vicinity of the power supply BAT. A series circuit of the resistor Rt1 and the thermistor T1 is connected to the ground line and a regulator terminal TREG of the remaining amount meter IC 12. A connection point of the thermistor T1 and the resistor Rt1 is connected to a thermistor terminal THM of the remaining amount meter IC 12. The thermistor T1 may be a PTC (Positive Temperature Coefficient) thermistor whose resistance value increases as a temperature increases, or may be a NTC (Negative Temperature Coefficient) thermistor whose resistance value decreases as the temperature increases.

The remaining amount meter IC 12 detects a current flowing through the resistor Rb, and derives battery information such as a remaining capacity of the power supply BAT, a SOC (State Of Charge) indicating a charging state, and a SOH (State Of Health) indicating a sound state, based on the detected value of the current. The remaining amount meter IC 12 supplies a voltage from a built-in regulator connected to the regulator terminal TREG to a voltage dividing circuit of the thermistor T1 and the resistor Rt1. The remaining amount meter IC 12 acquires a voltage divided by the voltage dividing circuit from the thermistor terminal THM, and acquires temperature information relating to the temperature of the power supply BAT based on the voltage. The remaining amount meter IC 12 is connected to the MCU 1 via the communication line LN for serial communication, and is capable of communicating with the MCU 1. The remaining amount meter IC 12 transmits the derived battery information and the acquired temperature information of the power supply BAT to the MCU 1 in response to a request from the MCU 1. In order to perform serial communication, a plurality of signal lines such as a data line for data transmission and a clock line for synchronization are required. In FIGS. 10 to 19, for simplification, only one signal line is illustrated.

The remaining amount meter IC 12 includes a notification terminal 12a. The notification terminal 12a is connected to a terminal P6 of the MCU 1 and a cathode of a diode D2 to be described later. When an abnormality such as an excessively high temperature of the power supply BAT is detected, the remaining amount meter IC 12 outputs a low-level signal from the notification terminal 12a to notify the MCU 1 of the occurrence of the abnormality. The low-level signal is also input to a CLR ( ) terminal of the FF 17 via the diode D2.

One end of a reactor Lc is connected to a switching terminal SW of the step-up DC/DC converter 9. The other end of the reactor Lc is connected to the input terminal VIN of the step-up DC/DC converter 9. The step-up DC/DC converter 9 executes on/off control of a built-in transistor connected to the switching terminal SW to step up the input voltage and output the voltage from the output terminal VOUT. The input terminal VIN of the step-up DC/DC converter 9 constitutes a power supply terminal on the high potential side of the step-up DC/DC converter 9. The step-up DC/DC converter 9 performs a step-up operation when a signal input to an enable terminal EN becomes high level. In a USB-connected state, the signal input to the enable terminal EN of the step-up DC/DC converter 9 may be controlled to be low level by the MCU 1. Alternatively, in the USB-connected state, the MCU 1 does not control the signal input to the enable terminal EN of the step-up DC/DC converter 9, so that a potential of the enable terminal EN may be indefinite.

A source terminal of a switch S4 formed of a P-channel MOSFET is connected to the output terminal VOUT of the step-up DC/DC converter 9. A gate terminal of the switch S4 is connected to a terminal P15 of the MCU 1. One end of the resistor Rs is connected to a drain terminal of the switch S4. The other end of the resistor Rs is connected to the heater connector Cn on the positive electrode side connected to one end of the heater HTR. A connection point of the switch S4 and the resistor Rs is connected to a voltage dividing circuit Pb including two resistors. A connection point of the two resistors constituting the voltage dividing circuit Pb is connected to a terminal P18 of the MCU 1. The connection point of the switch S4 and the resistor Rs is further connected to a positive power supply terminal of the operational amplifier OP1.

A source terminal of the switch S3 formed of a P-channel MOSFET is connected to a connection line between the output terminal VOUT of the step-up DC/DC converter 9 and the source terminal of the switch S4. A gate terminal of the switch S3 is connected to a terminal P16 of the MCU 1. A drain terminal of the switch S3 is connected to a connection line between the resistor Rs and the heater connector Cn on the positive electrode side. Therefore, a circuit including the switch S3 and a circuit including the switch S4 and the resistor Rs are connected in parallel between the output terminal VOUT of the step-up DC/DC converter 9 and the positive electrode side of the heater connector Cn. Since the circuit including the switch S3 does not include a resistor, the circuit is a circuit having a lower resistance than the circuit including the switch S4 and the resistor Rs.

A non-inverting input terminal of the operational amplifier OP1 is connected to a connection line between the resistor Rs and the heater connector Cn on the positive electrode side. An inverting input terminal of the operational amplifier OP 1 is connected to the heater connector Cn on the negative electrode side connected to the other end of the heater HTR and a drain terminal of the switch S6 formed of an N-channel MOSFET. A source terminal of the switch S6 is connected to the ground line. A gate terminal of the switch S6 is connected to a terminal P14 of the MCU 1, an anode of the diode D4, and the enable terminal EN of the step-up DC/DC converter 9. A cathode of the diode D4 is connected to a Q terminal of the FF 17. One end of a resistor R4 is connected to an output terminal of the operational amplifier OP1. The other end of the resistor R4 is connected to a terminal P9 of the MCU 1 and a drain terminal of the switch S5 formed of the N-channel MOSFET. A source terminal of the switch S5 is connected to the ground line. A gate terminal of the switch S5 is connected to the connection line between the resistor Rs and the heater connector Cn on the positive electrode side.

The input terminal VBUS of the charging IC 2 is connected to an anode of each of the LEDs L1 to L8. Cathodes of the LEDs L1 to L8 are connected to control terminals PD1 to PD8 of the MCU 1 via resistors for current limitation, respectively. That is, the LEDs L1 to L8 are connected in parallel to the input terminal VBUS. The LEDs L1 to L8 are operable by the USB voltage V_{USB} supplied from the USB cable connected to the receptacle RCP and a voltage supplied from the power supply BAT through the charging IC 2. Transistors (switching elements) connected to the control terminals PD1 to PD8 and the ground terminal GND are built in the MCU 1. The MCU 1 turns on the transistor connected to the control terminal PD1 to energize the LED L1 to turn on the LED L1, and turns off the transistor connected to the control terminal PD1 to turn off the LED L1. By switching on and off the transistor connected to the control terminal PD1 at high speed, luminance and a light emission pattern of the LED L1 can be dynamically controlled. Similarly, lighting of the LEDs L2 to L8 is controlled by the MCU 1.

The charging IC 2 has a charging function of charging the power supply BAT based on the USB voltage V_{USB} input to the input terminal VBUS. The charging IC 2 acquires a charging current and a charging voltage of the power supply BAT from a terminal or wiring (not illustrated), and executes charging control of the power supply BAT (a power supply control from the charging terminal bat to the power supply BAT) based on the acquired charging current and charging voltage. The charging IC 2 may acquire the temperature information of the power supply BAT transmitted from the remaining amount meter IC 12 to the MCU 1 from the MCU 1 through serial communication using the communication line LN, and use the acquired temperature information for charging control.

The charging IC 2 further has a V_{BAT} power path function and an OTG function. The V_{BAT} power path function is a function of outputting, from an output terminal SYS, a system power supply voltage Vcc0 that substantially coincides with the power supply voltage V_{BAT} input to the charging terminal bat. The OTG function is a function of outputting, from the input terminal VBUS, a system power supply voltage Vcc4 obtained by stepping up the power supply voltage V_{BAT} input to the charging terminal bat. The on/off of the OTG function of the charging IC 2 is controlled by the MCU 1 through the serial communication using the communication line LN. In the OTG function, the power supply voltage V_{BAT} input to the charging terminal bat may be directly output from the input terminal VBUS. In this case, the power supply voltage V_{BAT} and the system power supply voltage Vcc4 substantially coincide with each other.

The output terminal SYS of the charging IC 2 is connected to the input terminal VIN of the step-up/down DC/DC converter 8. One end of a reactor La is connected to the switching terminal SW of the charging IC 2. The other end of the reactor La is connected to the output terminal SYS of the charging IC 2. A charge enable terminal CE ( ) of the charging IC 2 is connected to a terminal P22 of the MCU 1 via a resistor. Further, the collector terminal of the bipolar transistor S1 is connected to the charge enable terminal CE ( ) of the charging IC 2. The emitter terminal of the bipolar transistor S1 is connected to the output terminal VOUT of the LSW4 to be described later. A base terminal of the bipolar transistor S 1 is connected to the Q terminal of the FF 17. Further, one end of the resistor Rc is connected to the charge enable terminal CE ( ) of the charging IC 2. The other end of the resistor Rc is connected to the output terminal VOUT of the LSW4.

A resistor is connected to the input terminal VIN and the enable terminal EN of the step-up/down DC/DC converter 8. When the system power supply voltage Vcc0 is input from the output terminal SYS of the charging IC 2 to the input terminal VIN of the step-up/down DC/DC converter 8, a signal input to the enable terminal EN of the step-up/down DC/DC converter 8 becomes high level, and the step-up/down DC/DC converter 8 starts a step-up operation or a step-down operation. The step-up/down DC/DC converter 8 steps up or steps down the system power supply voltage Vcc0 input to the input terminal VIN by switching control of a built-in transistor connected to a reactor Lb to generate a system power supply voltage Vcc 1, and outputs the system power supply voltage Vcc1 from the output terminal VOUT. The output terminal VOUT of the step-up/down DC/DC converter 8 is connected to a feedback terminal FB of the step-up/down DC/DC converter 8, the input terminal VIN of the LSW4, the input terminal VIN of the switch driver 7, and the power supply terminal VCC and a D terminal of the FF 16. A wiring to which the system power supply voltage Vcc1 outputted from the output terminal VOUT of the step-up/down DC/DC converter 8 is supplied is referred to as a power supply line PL 1.

When the signal input to the control terminal ON is at a high level, the LSW4 outputs, from the output terminal VOUT, the system power supply voltage Vcc1 input to the input terminal VIN. The control terminal ON of the LSW4 and the power supply line PL1 are connected via a resistor. Therefore, when the system power supply voltage Vcc1 is supplied to the power supply line PL1, a high-level signal is input to the control terminal ON of the LSW4. A voltage output from the LSW4 is the same as the system power supply voltage Vcc1 if wiring resistance and the like are ignored., but in order to distinguish from system power supply voltage Vcc1, a voltage output from output terminal VOUT of the LSW4 is hereinafter referred to as system power supply voltage Vcc2.

The output terminal VOUT of the LSW4 is connected to the power supply terminal VDD of the MCU 1, the input terminal VIN of the LSW5, the power supply terminal VDD of the remaining amount meter IC 12, the power supply terminal VCC of the ROM 6, the emitter terminal of the bipolar transistor S1, the resistor Rc, and the power supply terminal VCC of the FF 17. A wiring to which the system power supply voltage Vcc2 output from the output terminal VOUT of the LSW4 is supplied is referred to as a power supply line PL2.

When the signal input to the control terminal ON is at a high level, the LSW5 outputs, from the output terminal VOUT, the system power supply voltage Vcc2 input to the input terminal VIN. The control terminal ON of the LSW5 is connected to a terminal P23 of the MCU 1. A voltage output from the LSW5 is the same as the system power supply voltage Vcc2 if wiring resistance and the like are ignored, but in order to distinguish from system power supply voltage Vcc2, a voltage output from output terminal VOUT of the LSW5 is hereinafter referred to as system power supply voltage Vcc3. A wiring to which the system power supply voltage Vcc3 output from the output terminal VOUT of the LSW5 is supplied is referred to as a power supply line PL3.

A series circuit of the thermistor T2 and the resistor Rt2 is connected to the power supply line PL3, and the resistor Rt2 is connected to the ground line. The thermistor T2 and the resistor Rt2 constitute a voltage dividing circuit, and a connection point of the thermistor T2 and the resistor Rt2 is connected to a terminal P21 of the MCU 1. The MCU 1 detects a temperature fluctuation (a resistance value fluctuation) of the thermistor T2 based on a voltage input to the terminal P21, and determines the presence or absence of the puff operation based on a temperature fluctuation amount.

A series circuit of the thermistor T3 and the resistor Rt3 is connected to the power supply line PL3, and the resistor Rt3 is connected to the ground line. The thermistor T3 and the resistor Rt3 constitute a voltage dividing circuit, and a connection point of the thermistor T3 and the resistor Rt3 is connected to a terminal P13 of the MCU 1 and an inverting input terminal of the operational amplifier OP2. The MCU 1 detects a temperature of the thermistor T3 (corresponding to the temperature of the heater HTR) based on a voltage input to the terminal P13.

A series circuit of the thermistor T4 and the resistor Rt4 is connected to the power supply line PL3, and the resistor Rt4 is connected to the ground line. The thermistor T4 and the resistor Rt4 constitute a voltage dividing circuit, and a connection point of the thermistor T4 and the resistor Rt4 is connected to a terminal P12 of the MCU 1 and an inverting input terminal of the operational amplifier OP3. The MCU 1 detects a temperature of the thermistor T4 (corresponding to the temperature of the case 110) based on a voltage input to the terminal P12.

A source terminal of a switch S7 formed of a MOSFET is connected to the power supply line PL2. A gate terminal of the switch S7 is connected to a terminal P20 of the MCU 1. A drain terminal of the switch S7 is connected to one of a pair of connectors to which the vibration motor M is connected. The other of the pair of connectors is connected to the ground line. The MCU 1 can control opening and closing of the switch S7 by manipulating a potential of the terminal P20, and vibrate the vibration motor M in a specific pattern. A dedicated driver IC may be used instead of the switch S7.

The power supply line PL2 is connected to a positive power supply terminal of the operational amplifier OP2, and a voltage dividing circuit Pd (a series circuit of two resistors) connected to a non-inverting input terminal of the operational amplifier OP2. A connection point of the two resistors constituting the voltage dividing circuit Pd is connected to the non-inverting input terminal of the operational amplifier OP2. The operational amplifier OP2 outputs a signal corresponding to the temperature of the heater HTR (a signal corresponding to a resistance value of the thermistor T3). In the present embodiment, since the thermistor T3 having the NTC characteristic is used, the higher the temperature of the heater HTR (a temperature of the thermistor T3), the lower an output voltage of the operational amplifier OP2. This is because a negative power supply terminal of the operational amplifier OP2 is connected to the ground line, and a value of the output voltage of the operational amplifier OP2 is substantially equal to a value of the ground potential when a voltage value (a divided voltage value of the thermistor T3 and the resistor Rt3) input to the inverting input terminal of the operational amplifier OP2 is higher than a voltage value (a divided voltage value of the voltage dividing circuit Pd) input to the non-inverting input terminal of the operational amplifier OP2. That is, when the temperature of the heater HTR (the temperature of the thermistor T3) is high, the output voltage of the operational amplifier OP2 is at a low level.

In the case of using the thermistor T3 having the PTC characteristic, an output of a voltage dividing circuit of the thermistor T3 and the resistor Rt3 may be connected to the non-inverting input terminal of the operational amplifier OP2, and an output of the voltage dividing circuit Pd may be connected to the inverting input terminal of the operational amplifier OP2.

The power supply line PL2 is connected to a positive power supply terminal of an operational amplifier OP3, and a voltage dividing circuit Pe (a series circuit of two resistors) connected to a non-inverting input terminal of the operational amplifier OP3. A connection point of the two resistors constituting the voltage dividing circuit Pe is connected to the non-inverting input terminal of the operational amplifier OP3. The operational amplifier OP3 outputs a signal corresponding to the temperature of the case 110 (a signal corresponding to a resistance value of the thermistor T4). In the present embodiment, since the thermistor T4 having the NTC characteristic is used, the higher the temperature of the case 110, the lower an output voltage of the operational amplifier OP3. This is because a negative power supply terminal of the operational amplifier OP3 is connected to the ground line, and a value of the output voltage of the operational amplifier OP3 is substantially equal to a value of the ground potential when a voltage value (a divided voltage value by the thermistor T4 and the resistor Rt4) input to the inverting input terminal of the operational amplifier OP3 is higher than a voltage value (a divided voltage value by the voltage dividing circuit Pe) input to the non-inverting input terminal of the operational amplifier OP3. That is, when the temperature of the thermistor T4 is high, the output voltage of the operational amplifier OP3 is at a low level.

In the case of using the thermistor T4 having the PTC characteristic, an output of a voltage dividing circuit of the thermistor T4 and the resistor Rt4 may be connected to the non-inverting input terminal of the operational amplifier OP3, and an output of the voltage dividing circuit Pe may be connected to the inverting input terminal of the operational amplifier OP3.

A resistor R1 is connected to an output terminal of the operational amplifier OP2. A cathode of the diode D1 is connected to the resistor R1. An anode of the diode D1 is connected to an output terminal of the operational amplifier OP3, a terminal D of the FF 17, and the CLR ( ) terminal of the FF 17. A resistor R2 connected to the power supply line PL1 is connected to a connection line between the resistor R1 and the diode D1. A CLR ( ) terminal of the FF 16 is connected to the connection line.

One end of the resistor R3 is connected to a connection line between a connection point of the anode of the diode D1 and the output terminal of the operational amplifier OP3 and the D terminal of the FF 17. The other end of the resistor R3 is connected to the power supply line PL2. Further, an anode of the diode D2 connected to the notification terminal 12a of the remaining amount meter IC 12, an anode of the diode D3, and the CLR ( ) terminal of the FF 17 are connected to the connection line. A cathode of the diode D3 is connected to a terminal P5 of the MCU 1.

When the temperature of the heater HTR is excessively high, a signal output from the operational amplifier OP2 is small, and a signal input to the CLR ( ) terminal is at a low level, the FF 16 inputs a high-level signal from a Q ( ) terminal to a terminal P11 of the MCU 1. The high-level system power supply voltage Vcc1 is supplied from the power supply line PL1 to the D terminal of the FF 16. Therefore, the FF 16 continues to output a low-level signal from the Q ( ) terminal as long as the signal input to the CLR ( ) terminal operating in a negative logic is not at a low level.

The signal input to the CLR ( ) terminal of the FF 17 is at a low level in either case where the temperature of the heater HTR is excessively high, a case where the temperature of the case 110 is excessively high, or a case where a low-level signal indicating abnormality detection is output from the notification terminal 12a of the remaining amount meter IC 12. When the signal input to the CLR ( ) terminal is at a low level, the FF 17 outputs the low-level signal from the Q terminal. The low-level signal is input to a terminal P10 of the MCU 1, the gate terminal of the switch S6, the enable terminal EN of the step-up DC/DC converter 9, and the base terminal of the bipolar transistor S1 connected to the charging IC 2. When the low-level signal is input to the gate terminal of the switch S6, a gate-source voltage of the N-channel MOSFET constituting the switch S6 is lower than a threshold voltage, so that the switch S6 is turned off. When the low-level signal is input to the enable terminal EN of the step-up DC/DC converter 9, the enable terminal EN of the step-up DC/DC converter 9 has a positive logic, and thus the step-up operation is stopped. When the low-level signal is input to the base terminal of the bipolar transistor S1, the bipolar transistor S1 is turned on (current amplified from the collector terminal is output). When the bipolar transistor S1 is turned on, the high-level system power supply voltage Vcc2 is input to the CE ( ) terminal of the charging IC 2 via the bipolar transistor S1. Since the CE ( ) terminal of the charging IC 2 has a negative logic, the charging of the power supply BAT is stopped. Thus, heating of the heater HTR and the charging of the power supply BAT are stopped. Even when the MCU 1 outputs a low-level enable signal from the terminal P22 to the charge enable terminal CE ( ) of the charging IC 2, when the bipolar transistor S1 is turned on, the amplified current is input from the collector terminal to the terminal P22 of the MCU 1 and the charge enable terminal CE ( ) of the charging IC 2. Accordingly, a high-level signal is input to the charge enable terminal CE ( ) of the charging IC 2.

The high-level system power supply voltage Vcc2 is supplied from the power supply line PL2 to the D terminal of the FF 17. Therefore, the FF 17 continues to output a high-level signal from the Q terminal as long as the signal input to the CLR ( ) terminal operating in a negative logic is not at a low level. When a low-level signal is output from the output terminal of the operational amplifier OP3, the low-level signal is input to the CLR ( ) terminal of the FF 17 regardless of a level of the signal output from the output terminal of the operational amplifier OP2. When a high-level signal is output from the output terminal of the operational amplifier OP2, the low-level signal output from the output terminal of the operational amplifier OP3 is not influenced by the high-level signal due to the diode D1. When a low-level signal is output from the output terminal of the operational amplifier OP2, even when a high-level signal is output from the output terminal of the operational amplifier OP3, the high-level signal is replaced with the low-level signal via the diode D1.

The power supply line PL2 is further branched from the MCU mounting board 161 toward the LED mounting board 163 and the Hall IC mounting board 164. The power supply terminal VDD of the Hall IC 13, the power supply terminal VCC of the communication IC 15, and the power supply terminal VDD of the Hall IC 14 are connected to the branched power supply line PL2.

The output terminal OUT of the Hall IC 13 is connected to a terminal P3 of the MCU 1 and a terminal SW2 of the switch driver 7. When the outer panel 115 is detached, a low-level signal is output from the output terminal OUT of the Hall IC 13. The MCU 1 determines whether the outer panel 115 is attached based on a signal input to the terminal P3.

The LED mounting board 163 is provided with a series circuit (a series circuit of a resistor and a capacitor) connected to the operation switch OPS. The series circuit is connected to the power supply line PL2. A connection point of the resistor and the capacitor of the series circuit is connected to the terminal P4 of the MCU 1, the operation switch OPS, and a terminal SW1 of the switch driver 7. In a state where the operation switch OPS is not pressed, the operation switch OPS is not conductive, and signals input to the terminal P4 of the MCU 1 and the terminal SW1 of the switch driver 7 are at a high level due to the system power supply voltage Vcc2. When the operation switch OPS is pressed and the operation switch OPS is in a conductive state, the signals input to the terminal P4 of the MCU 1 and the terminal SW1 of the switch driver 7 are connected to the ground line, and thus the signals are at a low level. The MCU 1 detects the operation of the operation switch OPS based on the signal input to the terminal P4.

The switch driver 7 is provided with a reset input terminal RSTB. The reset input terminal RSTB is connected to the control terminal ON of the LSW4. When levels of the signals input to the terminal SW1 and the terminal SW2 are both at a low level (a state where the outer panel 115 is detached and the operation switch OPS is pressed), the switch driver 7 stops an output operation of the LSW 4 by outputting a low-level signal from the reset input terminal RSTB. That is, when the operation switch OPS, which is originally pressed down via the pressing portion 117 of the outer panel 115, is directly pressed down by the user in a state where the outer panel 115 is detached, the levels of the signals input to the terminal SW1 and the terminal SW2 of the switch driver 7 are both at a low level.

### <Operation in Each Operation Mode of Inhaler>

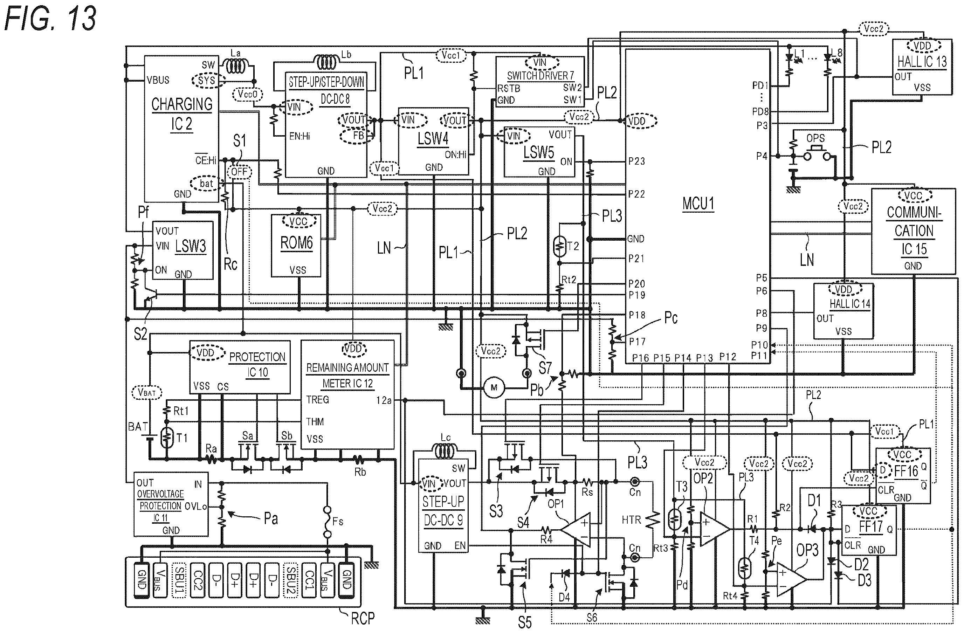

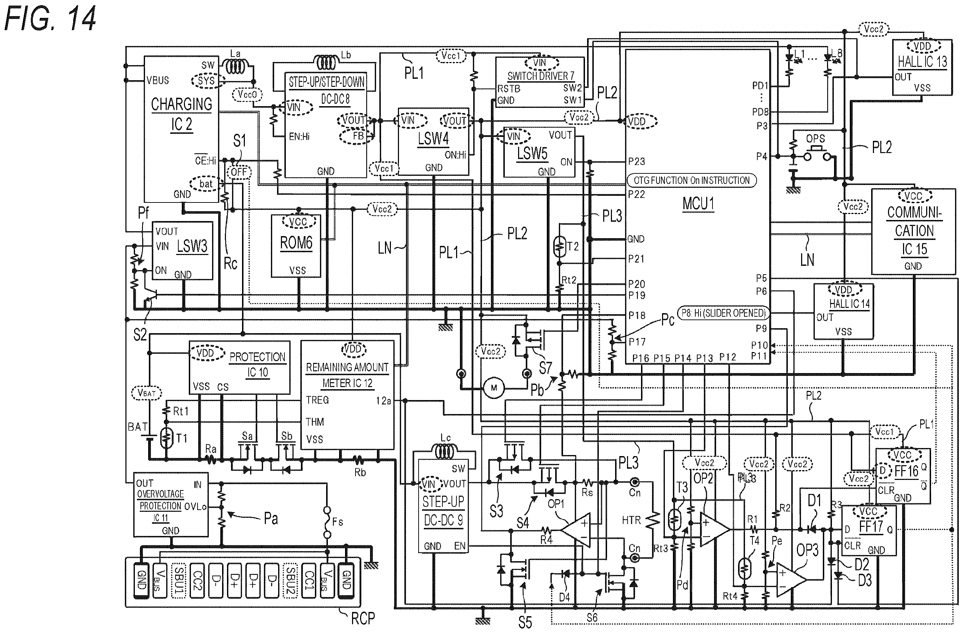

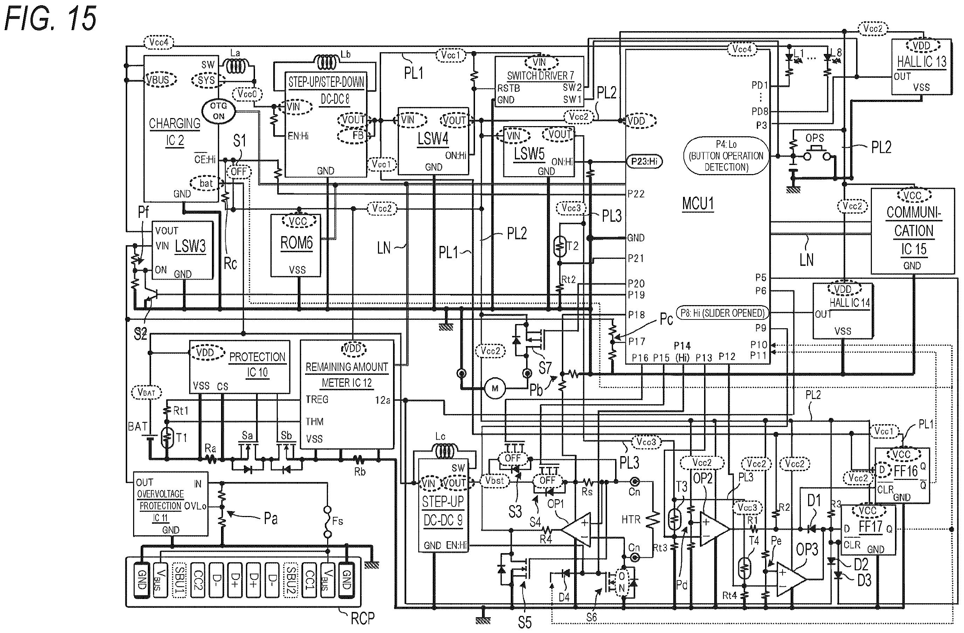

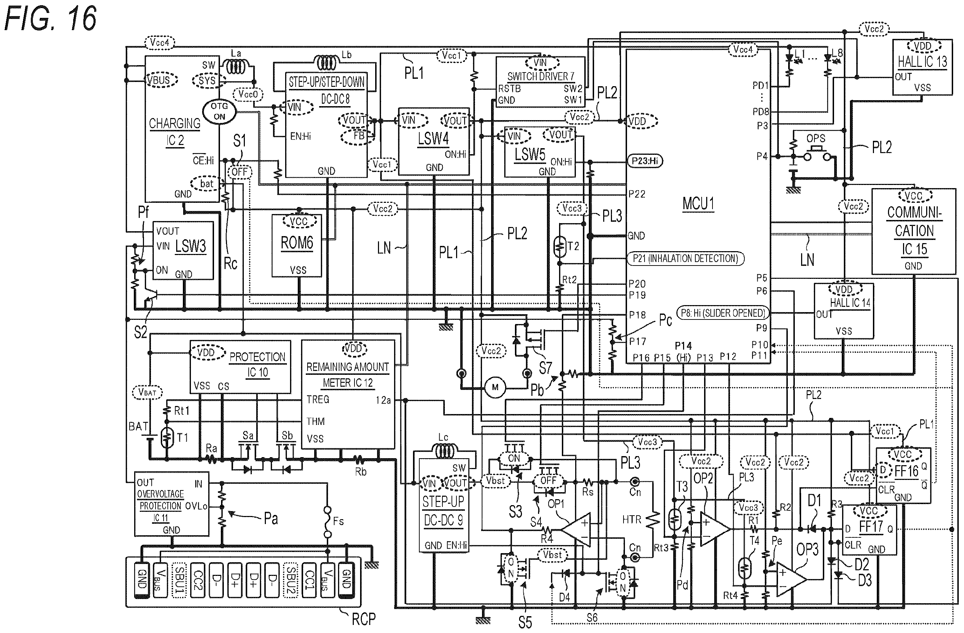

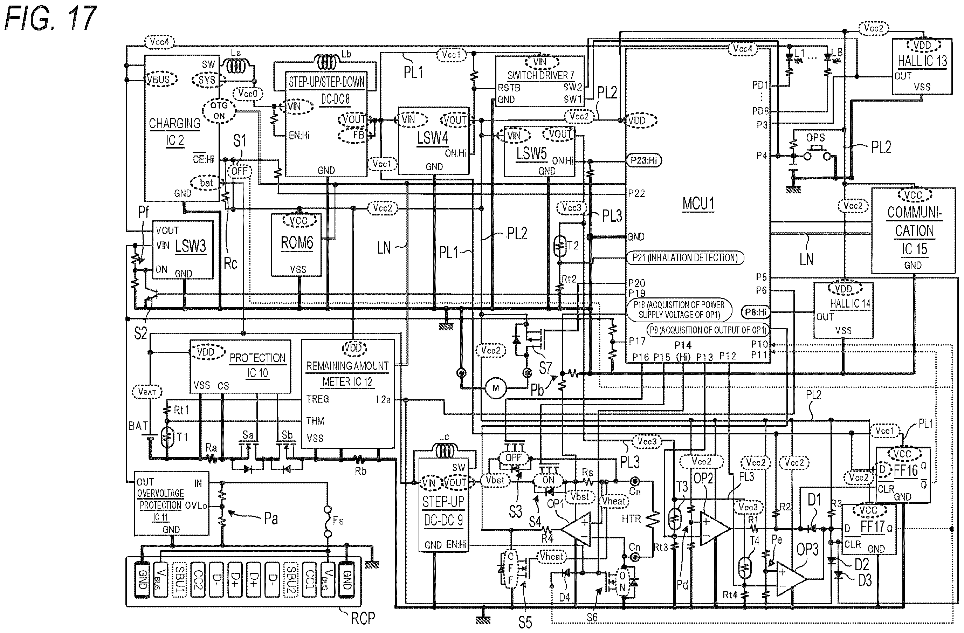

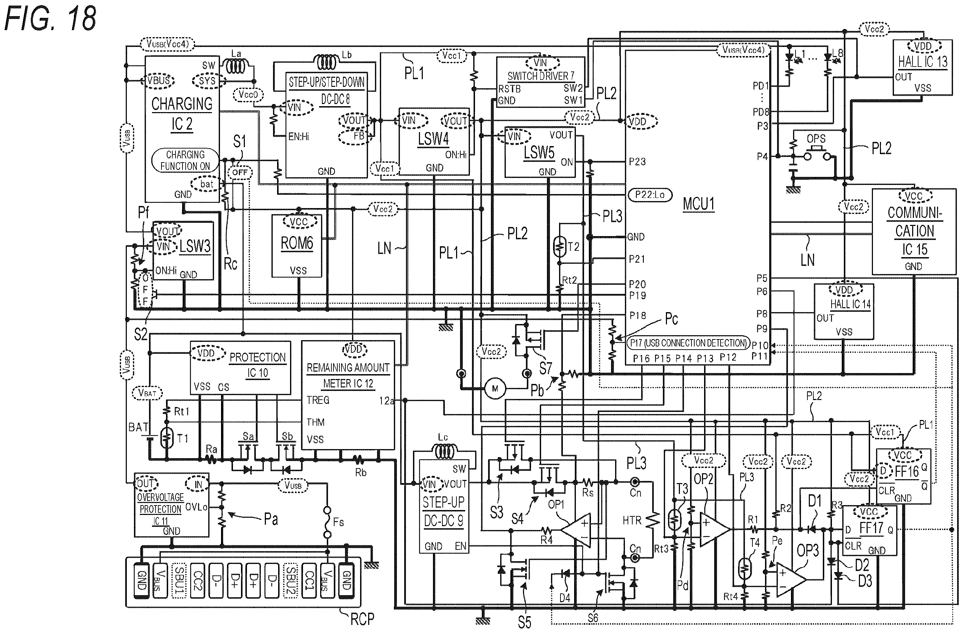

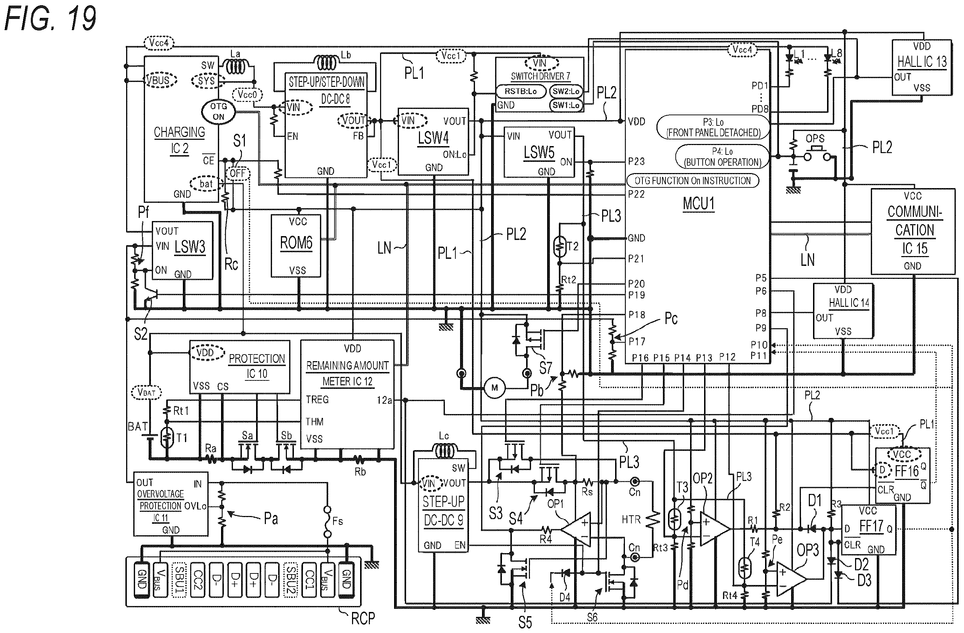

An operation of the electric circuit illustrated in FIG. 10 will be described below with reference to FIGS. 13 to 19. FIG. 13 is a diagram illustrating an operation of the electric circuit in the sleep mode. FIG. 14 is a diagram illustrating an operation of the electric circuit in the active mode. FIG. 15 is a diagram illustrating an operation of the electric circuit in the heating initial setting mode. FIG. 16 is a diagram illustrating an operation of the electric circuit during heating by the heater HTR in the heating mode. FIG. 17 is a diagram illustrating an operation of the electric circuit when a temperature of the heater HTR is detected in the heating mode. FIG. 18 is a diagram illustrating an operation of the electric circuit in the charging mode. FIG. 19 is a diagram illustrating an operation of the electric circuit when the MCU 1 is reset (restarted). In FIGS. 13 to 19, among terminals of the chipped electronic components, terminals surrounded by broken ellipses indicate terminals to which the power supply voltage V_{BAT}, the USB voltage V_{USB}, the system power supply voltages, and the like are input or output.

In any operation mode, the power supply voltage V_{BAT} is input to the power supply terminal VDD of the protection IC 10, the input terminal VIN of the step-up DC/DC converter 9, and the charging terminal bat of the charging IC 2.

### <Sleep Mode: FIG. 13>

The MCU 1 enables the V_{BAT} power path function of the charging IC 2 and disables the OTG function and the charging function. Since the USB voltage V_{USB} is not input to the input terminal VBUS of the charging IC 2, the V_{BAT} power path function of the charging IC 2 is enabled. Since a signal for enabling the OTG function from the communication line LN is not output from the MCU 1 to the charging IC 2, the OTG function is disabled. Therefore, the charging IC 2 generates the system power supply voltage Vcc0 from the power supply voltage V_{BAT} input to the charging terminal bat, and outputs the system power supply voltage Vcc0 from the output terminal SYS. The system power supply voltage Vcc0 output from the output terminal SYS is input to the input terminal VIN and the enable terminal EN of the step-up/down DC/DC converter 8. The step-up/down DC/DC converter 8 is enabled when the high-level system power supply voltage Vcc0 is input to the enable terminal EN which has a positive logic, generates the system power supply voltage Vcc1 from the system power supply voltage Vcc0, and outputs the system power supply voltage Vcc1 from the output terminal VOUT. The system power supply voltage Vcc1 outputted from the output terminal VOUT of the step-up/down DC/DC converter 8 is supplied to the input terminal VIN of the LSW4, the control terminal ON of the LSW4, the input terminal VIN of the switch driver 7, and the power supply terminal VCC and the D terminal of the FF 16, respectively.

When the system power supply voltage Vcc1 is input to the control terminal ON, the LSW 4 outputs, from the output terminal VOUT, the system power supply voltage Vcc1 input to the input terminal VIN as the system power supply voltage Vcc2. The system power supply voltage Vcc2 output from the LSW4 is input to the power supply terminal VDD of the MCU 1, the input terminal VIN of the LSW5, the power supply terminal VDD of the Hall IC 13, the power supply terminal VCC of the communication IC 15, and the power supply terminal VDD of the Hall IC 14. Further, the system power supply voltage Vcc2 is supplied to the power supply terminal VDD of the remaining amount meter IC 12, the power supply terminal VCC of the ROM 6, the resistor Rc connected to the charge enable terminal CE ( ) of the charging IC 2 and the bipolar transistor S1, the power supply terminal VCC of the FF 17, the positive power supply terminal of the operational amplifier OP3, the voltage dividing circuit Pe, the positive power supply terminal of the operational amplifier OP2, and the voltage dividing circuit Pd, respectively. The bipolar transistor S1 connected to the charging IC 2 is turned off unless a low-level signal is output from the Q terminal of the FF 17. Therefore, the system power supply voltage Vcc2 generated by the LSW4 is also input to the charge enable terminal CE ( ) of the charging IC 2. Since the charge enable terminal CE ( ) of the charging IC 2 has a negative logic, the charging function by the charging IC 2 is turned off in this state.

As described above, in the sleep mode, the LSW5 stops outputting the system power supply voltage Vcc3, and thus the power supply to the electronic components connected to the power supply line PL3 is stopped. In the sleep mode, the OTG function of the charging IC 2 is stopped, and thus the power supply to the LEDs L 1 to L8 is stopped.

### <Active Mode: FIG. 14>

Upon detecting that the signal input to the terminal P8 is at a high level and the slider 119 is opened from a state of the sleep mode in FIG. 13, the MCU 1 inputs a high-level signal from the terminal P23 to the control terminal ON of the LSW5. Accordingly, the LSW5 outputs, from the output terminal VOUT, the system power supply voltage Vcc2 inputted to the input terminal VIN as the system power supply voltage Vcc3. The system power supply voltage Vcc3 output from the output terminal VOUT of the LSW 5 is supplied to the thermistor T2, the thermistor T3, and the thermistor T4.

Further, upon detecting that the slider 119 is opened, the MCU 1 enables the OTG function of the charging IC 2 via the communication line LN. Accordingly, the charging IC 2 outputs, from the input terminal VBUS, the system power supply voltage Vcc4 obtained by stepping up the power supply voltage V_{BAT} input from the charging terminal bat. The system power supply voltage Vcc4 output from the input terminal VBUS is supplied to the LEDs L1 to L8.

### <Heating Initial Setting Mode: FIG. 15>

When a signal input to the terminal P4 is at a low level (the operation switch OPS is pressed) from the state of FIG. 14, the MCU 1 performs various settings necessary for heating, and then inputs a high-level enable signal from the terminal P14 to the enable terminal EN of the step-up DC/DC converter 9. Accordingly, the step-up DC/DC converter 9 outputs, from the output terminal VOUT, a drive voltage V_{bst} obtained by stepping up the power supply voltage V_{BAT}. The drive voltage V_{bst} is supplied to the switch S3 and the switch S4. In this state, the switches S3 and S4 are turned off. The switch S6 is turned on by the high-level enable signal output from the terminal P14. Accordingly, when a negative electrode side terminal of the heater HTR is connected to the ground line and the switch S3 is turned on, the heater HTR can be heated. After the enable signal of the high-level signal is output from the terminal P14 of the MCU 1, the mode shifts to the heating mode.

### <Heater Heating in Heating Mode: FIG. 16>

In the state in FIG. 15, the MCU 1 starts switching control of the switch S3 connected to the terminal P16 and switching control of the switch S4 connected to the terminal P15. These switching control may be started automatically when the above-described heating initial setting mode is completed, or may be started by further pressing the operation switch OPS. Specifically, as illustrated in FIG. 16, the MCU 1 turns on the switch S3, turns off the switch S4, supplies the drive voltage V_{bst} to the heater HTR, and executes heating control for heating the heater HTR for aerosol generation. As illustrated in FIG. 17, the MCU 1 turns off the switch S3, turns on the switch S4, and executes temperature detection control for detecting the temperature of the heater HTR.

As illustrated in FIG. 16, during the heating control, the drive voltage V_{bst} is also supplied to a gate of the switch S5, and the switch S5 is turned on. During the heating control, the drive voltage V_{bst} that has passed through the switch S3 is also input to the positive power supply terminal of the operational amplifier OP1 via the resistor Rs. A resistance value of the resistor Rs is negligibly small as compared with an internal resistance value of the operational amplifier OP 1. Therefore, during the heating control, a voltage input to the positive power supply terminal of the operational amplifier OP1 is substantially equal to the drive voltage V_{bst}.

A resistance value of the resistor R4 is larger than an ON-resistance value of the switch S5. Although the operational amplifier OP1 operates during the heating control, the switch S5 is turned on during the heating control. In a state where the switch S5 is turned on, an output voltage of the operational amplifier OP1 is divided by a voltage dividing circuit of the resistor R4 and the switch S5 and input to the terminal P9 of the MCU 1. Since the resistance value of the resistor R4 is larger than the ON-resistance value of the switch S5, a voltage input to the terminal P9 of the MCU 1 is sufficiently reduced. Accordingly, a large voltage can be prevented from being input from the operational amplifier OP 1 to the MCU 1.

### <Heater Temperature Detection in Heating Mode: FIG. 17>

As illustrated in FIG. 17, during the temperature detection control, the drive voltage V_{bst} is input to the positive power supply terminal of the operational amplifier OP1 and also to the voltage dividing circuit Pb. A voltage divided by the voltage dividing circuit Pb is input to the terminal P18 of the MCU 1. The MCU 1 acquires a reference voltage Vₜₑₘₚ applied to a series circuit of the resistor Rs and the heater HTR during the temperature detection control based on the voltage input to the terminal P18.

During the temperature detection control, the drive voltage V_{bst} (reference voltage Vₜₑₘₚ) is supplied to the series circuit of the resistor Rs and the heater HTR. A voltage Vₕₑₐₜ obtained by dividing the drive voltage V_{bst} (reference voltage Vₜₑₘₚ) by the resistor Rs and the heater HTR is input to the non-inverting input terminal of the operational amplifier OP 1. Since the resistance value of the resistor Rs is sufficiently larger than a resistance value of the heater HTR, the voltage Vₕₑₐₜ is sufficiently lower than the drive voltage V_{bst}. During the temperature detection control, when the low voltage Vₕₑₐₜ is also supplied to the gate terminal of the switch S5, the switch S5 is turned off. The operational amplifier OP1 amplifies and outputs a difference between a voltage input to the inverting input terminal and the voltage Vₕₑₐₜ input to the non-inverting input terminal.

An output signal of the operational amplifier OP1 is input to the terminal P9 of the MCU 1. The MCU 1 acquires the temperature of the heater HTR based on the signal input to the terminal P9, the reference voltage Vₜₑₘₚ acquired based on an input voltage of the terminal P18, and an electric resistance value of the known resistor Rs. The MCU 1 executes heating control of the heater HTR (for example, control such that the temperature of the heater HTR becomes a target temperature) based on the acquired temperature of the heater HTR.

The MCU 1 can acquire the temperature of the heater HTR even during a period during which the switch S3 and the switch S4 are turned off (period during which the heater HTR is not energized). Specifically, the MCU 1 acquires the temperature of the heater HTR based on the voltage input to the terminal P13 (output voltage of the voltage dividing circuit including the thermistor T3 and the resistor Rt3).

The MCU 1 can also acquire the temperature of the case 110 at any timing. Specifically, the MCU 1 acquires the temperature of the case 110 based on the voltage input to the terminal P12 (output voltage of the voltage dividing circuit including the thermistor T4 and the resistor Rt4).

### <Charging Mode: FIG. 18>

FIG. 18 illustrates a case where the USB connection is performed in the sleep mode. When the USB connection is established, the USB voltage V_{USB} is input to the input terminal VIN of the LSW3 via the overvoltage protection IC 11. The USB voltage V_{USB} is also supplied to the voltage dividing circuit Pf connected to the input terminal VIN of the LSW3. Since the bipolar transistor S2 is turned on immediately after the USB connection is established, a signal input to the control terminal ON of the LSW3 remains at a low level. The USB voltage V_{USB} is also supplied to the voltage dividing circuit Pc connected to the terminal P17 of the MCU 1, and a voltage divided by the voltage dividing circuit Pc is input to the terminal P17. The MCU 1 detects that the USB connection is established based on the voltage input to the terminal P17.

In response to detecting that the USB connection is established, the MCU 1 turns off the bipolar transistor S2 connected to the terminal P19. When a low-level signal is input to a gate terminal of the bipolar transistor S2, the USB voltage V_{USB} divided by the voltage dividing circuit Pf is input to the control terminal ON of the LSW3. Accordingly, a high-level signal is input to the control terminal ON of the LSW3, and the LSW3 outputs the USB voltage V_{USB} from the output terminal VOUT. The USB voltage V_{USB} output from the LSW3 is input to the input terminal VBUS of the charging IC 2. The USB voltage V_{USB} output from the LSW3 is directly supplied to the LEDs L1 to L8 as the system power supply voltage Vcc4.

In response to detecting that the USB connection is established, the MCU 1 further outputs a low-level enable signal from the terminal P22 to the charge enable terminal CE ( ) of the charging IC 2. Accordingly, the charging IC 2 enables a charging function of the power supply BAT and starts charging the power supply BAT with the USB voltage V_{USB} input to the input terminal VBUS.

When the USB connection is established in the state of the active mode, the MCU 1 turns off the bipolar transistor S2 connected to the terminal P19 upon detecting that the USB connection is established, outputs a low-level enable signal from the terminal P22 to the charge enable terminal CE ( ) of the charging IC 2, and further turns off the OTG function of the charging IC 2 by serial communication using the communication line LN. Accordingly, the system power supply voltage Vcc4 supplied to the LEDs L1 to L8 is switched from a voltage generated by the OTG function of the charging IC 2 (voltage based on the power supply voltage V_{BAT}) to the USB voltage V_{USB} output from the LSW3. The LEDs L1 to L8 are not operated unless the built-in transistors are controlled on by the MCU 1. Therefore, an unstable voltage in a transition period from ON to OFF of the OTG function is prevented from being supplied to the LEDs L1 to L8.

In FIG. 18, a supply state of a system power supply voltage in the charging mode is the same as that in the sleep mode. However, the supply state of the system power supply voltage in the charging mode is preferably the same as that in the active mode illustrated in FIG. 14. That is, in the charging mode, it is preferable that the system power supply voltage Vcc3 is supplied to the thermistors T2 to T4 for temperature management to be described later.

### <Reset of MCU: FIG. 19>

When the outer panel 115 is detached and the output of the Hall IC 13 is at a low level and a signal input to the terminal P4 of the MCU 1 is at a low level by an ON operation of the operation switch OPS, the terminal SW1 and the terminal SW2 of the switch driver 7 are both at a low level. Accordingly, the switch driver 7 outputs a low-level signal from the reset input terminal RSTB. The low-level signal output from the reset input terminal RSTB is input to the control terminal ON of the LSW4. Accordingly, the LSW4 stops outputting the system power supply voltage Vcc2 from the output terminal VOUT. When the output of the system power supply voltage Vcc2 is stopped, the system power supply voltage Vcc2 is not input to the power supply terminal VDD of the MCU 1, and thus the MCU 1 is stopped.

The switch driver 7 returns the signal output from the reset input terminal RSTB to a high level when the time during which the low-level signal is output from the reset input terminal RSTB reaches a predetermined time or when the signal input to either the terminal SW1 or the terminal SW2 is at a high level. Accordingly, the control terminal ON of the LSW4 is at a high level, and the system power supply voltage Vcc2 returns to a state of being supplied to each unit.

In order to facilitate understanding, the thermistor T1 described above is also referred to as a power supply thermistor T1, the thermistor T2 described above is also referred to as a puff thermistor T2, the thermistor T3 described above is also referred to as a heater thermistor T3, and the thermistor T4 described above is also referred to as a case thermistor T4.

### <Details of Functions of Charging IC)

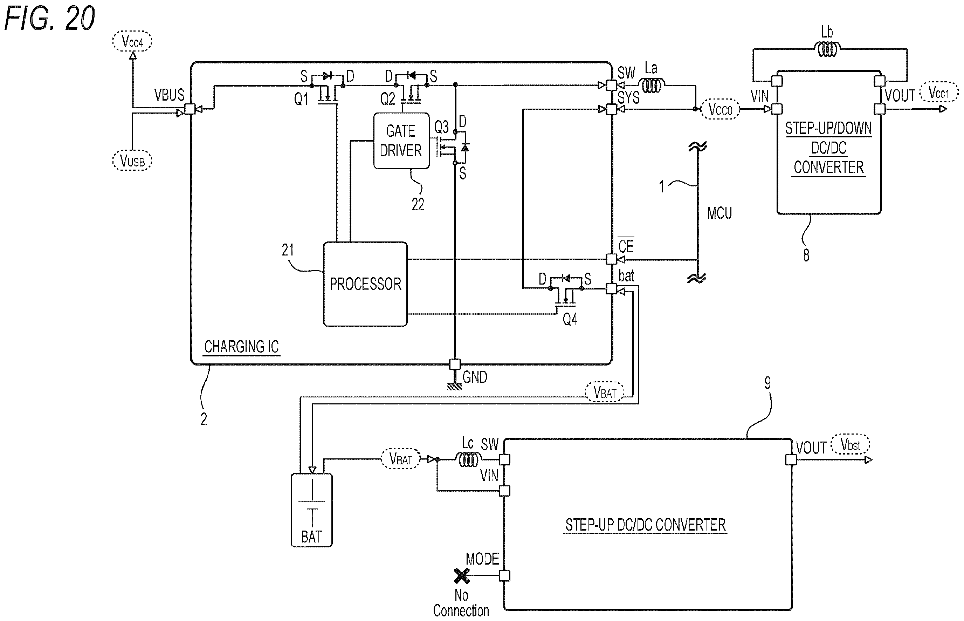

FIG. 20 is a diagram illustrating a schematic configuration inside the charging IC. The charging IC 2 includes a processor 21, a gate driver 22, and switches Q1 to Q4 formed of N-channel MOSFETs.

A source terminal of the switch Q1 is connected to the input terminal VBUS. A drain terminal of the switch Q1 is connected to a drain terminal of the switch Q2. A source terminal of the switch Q2 is connected to the switching terminal SW. A drain terminal of the switch Q3 is connected to a connection node between the switch Q2 and the switching terminal SW. A source terminal of the switch Q3 is connected to the ground terminal GND. A drain terminal of the switch Q4 is connected to the output terminal SYS. A source terminal of the switch Q4 is connected to the charging terminal bat.

The gate driver 22 is connected to a gate terminal of the switch Q2 and a gate terminal of the switch Q3, and executes on/off control of the switches Q2 and Q3 based on an instruction from the processor 21.

The processor 21 is connected to the gate driver 22, a gate terminal of the switch Q1, a gate terminal of the switch Q4, and the charge enable terminal CE ( ). The processor 21 executes the on/off control of the switches Q2 and Q3 and on/off control of the switches Q1 and Q4 via the gate driver 22.

The charging IC 2 has a V_{USB} power path function and a V_{USB} & V_{BAT} power path function in addition to the charging function, the V_{BAT} power path function, and the OTG function that are described above. Hereinafter, the contents of control inside the charging IC 2 when each of these functions is enabled will be described. Specific numerical values of the various voltages described above are preferably values illustrated below.
Power supply voltage V_{BAT} (full charge voltage) = 4.2 V
Power supply voltage V_{BAT} (nominal voltage) = 3.7 V
System power supply voltage Vcc1 = 3.3 V
System power supply voltage Vcc2 = 3.3 V
System power supply voltage Vcc3 = 3.3 V
System power supply voltage Vcc4 = 5.0 V
USB voltage V_{USB} = 5.0 V
Drive voltage V_{bst} = 4.9 V

### (Charging Function)

The processor 21 executes on/off control of the switch Q2 and the switch Q4 while controlling the switch Q1 to be on and the switch Q3 to be off. The on/off control of the switch Q4 is executed to adjust the charging current of the power supply BAT. The processor 21 executes the on/off control of the switch Q2 such that a voltage of the output terminal SYS is equal to a voltage suitable for the charging of the power supply BAT. Accordingly, the USB voltage V_{USB} input to the input terminal VBUS is stepped down and output from the output terminal SYS. The voltage output from the output terminal SYS is input to the input terminal VIN of the step-up/down DC/DC converter 8 as the system power supply voltage Vcc0, and is output from the charging terminal bat of the charging IC 2. Accordingly, the power supply BAT is charged with a voltage obtained by stepping down the USB voltage V_{USB}. When the charging function is enabled, the system power supply voltage Vcc0 eventually becomes the same value as a full charge voltage of the power supply BAT. Therefore, the step-up/down DC/DC converter 8 steps down the system power supply voltage Vcc0 of 4.2V input to the input terminal VIN to generate and output the system power supply voltage Vcc1 of 3.3V. When the charging function is enabled, a potential of the input terminal VBUS is higher than a potential of the output terminal SYS in the charging IC 2, so that the power from the power supply BAT is not output from the input terminal VBUS.

### (V_{USB} power path function)

The V_{USB} power path function is enabled, for example, when the power supply BAT cannot be used for reasons such as over-discharge or the like. The processor 21 turns on the switch Q1, turns on the switch Q2, turns off the switch Q3, and turns off the switch Q4. Accordingly, the USB voltage V_{USB} input to the input terminal VBUS is directly output from the switching terminal SW without being stepped down. The voltage output from the switching terminal SW is input to the input terminal VIN of the step-up/down DC/DC converter 8 as the system power supply voltage Vcc0. In this case, the step-up/down DC/DC converter 8 also steps down the system power supply voltage Vcc0 of 5V input to the input terminal VIN to generate and output the system power supply voltage Vcc1 of 3.3V. Even when the V_{USB} power path function is enabled, the processor 21 may execute the on/off control of the switch Q2 while controlling the switch Q1 to be on, the switch Q3 to be off, and the switch Q4 to be on. In this way, the charging IC 2 and the step-up/down DC/DC converter 8 can share to perform voltage step-down from the USB voltage V_{USB} of 5.0V to the system power supply voltage Vcc1 of 3.3V. Therefore, it is possible to prevent load and heat generation from being concentrated on the step-up/down DC/DC converter 8.

### (V_{USB} & V_{BAT} Power Path Function)

The V_{USB} & V_{BAT} power path function is enabled, for example, when the charging of the power supply BAT is completed and the USB connection is continued. The processor 21 executes on/off control of the switch Q2 while controlling the switch Q1 to be on, the switch Q3 to be off, and the switch Q4 to be on. The processor 21 controls the switch Q2 such that the voltage of the output terminal SYS is equal to the voltage of the power supply BAT (power supply voltage V_{BAT}). Accordingly, the USB voltage V_{USB} input to the input terminal VBUS is stepped down and output from the output terminal SYS. The voltage output from the output terminal SYS and obtained by stepping down the USB voltage V_{USB} input to the input terminal VBUS is the same as a voltage output from the output terminal SYS from the power supply BAT via the charging terminal bat. Therefore, power including the voltage obtained by stepping down the USB voltage V_{USB} and power including the power supply voltage V_{BAT} output from the output terminal SYS are combined to be supplied to the input terminal VIN of the step-up/down DC/DC converter 8. When the V_{USB} & V_{BAT} power path function is enabled, the potential of the input terminal VBUS is higher than the potential of the output terminal SYS in the charging IC 2, so that the power from the power supply BAT is not output from the input terminal VBUS.

When the V_{USB} & V_{BAT} power path function is enabled, the step-up/down DC/DC converter 8 whether step-up or step-down is performed according to magnitude of the power supply voltage V_{BAT}. When the power supply voltage V_{BAT} is 3.3V or more, the step-up/down DC/DC converter 8 steps down the system power supply voltage Vcc0 input to the input terminal VIN to generate and output the system power supply voltage Vcc1 of 3.3V. When the power supply voltage V_{BAT} is less than 3.3V, the step-up/down DC/DC converter 8 steps up the system power supply voltage Vcc0 input to the input terminal VIN to generate and output the system power supply voltage Vcc1 of 3.3V.

### (V_{BAT} Power Path Function)

The V_{BAT} power path function is enabled in a mode other than the charging mode (for example, sleep mode). The processor 21 controls the switches Q1 and Q3 to be off. Accordingly, the power supply voltage V_{BAT} input to the charging terminal bat is directly output from the output terminal SYS and input to the input terminal VIN of the step-up/down DC/DC converter 8 as the system power supply voltage Vcc0. According to this control, a power transmission path between the input terminal VBUS and the switching terminal SW of the charging IC 2 is blocked by a parasitic diode of the switch Q1. Therefore, the power supply voltage V_{BAT} output from the output terminal SYS is not output from the input terminal VBUS.

When the V_{BAT} power path function is enabled, the step-up/down DC/DC converter 8 determines whether step-up or step-down is performed according to the magnitude of the power supply voltage V_{BAT}. When the power supply voltage V_{BAT} input to the input terminal VIN is 3.3V or more, the step-up/down DC/DC converter 8 steps down the power supply voltage V_{BAT} to generate and output the system power supply voltage Vcc1 of 3.3V. When the power supply voltage V_{BAT} input to the input terminal VIN is less than 3.3V, the step-up/down DC/DC converter 8 steps up the power supply voltage V_{BAT} to generate and output the system power supply voltage Vcc 1 of 3.3 V.

### (OTG Function)

The OTG function is enabled simultaneously with the V_{BAT} power path function, and is enabled, for example, in the active mode. When both the OTG function and the V_{BAT} power path function are enabled, the processor 21 executes on/off control of the switch Q3 while controlling the switch Q1 to be on. Accordingly, the power supply voltage V_{BAT} input to the charging terminal bat is directly output from the output terminal SYS and input to the input terminal VIN of the step-up/down DC/DC converter 8 as the system power supply voltage Vcc0. The power supply voltage V_{BAT} output from the output terminal SYS is input to the switching terminal SW of the charging IC 2. The processor 21 controls the switch Q3 such that the power supply voltage V_{BAT} input to the switching terminal SW is equal to the system power supply voltage Vcc4. Accordingly, the power supply voltage V_{BAT} input to the switching terminal SW is stepped up and output from the input terminal VBUS. The voltage output from the input terminal VBUS is input to the LEDs L1 to L8 as the system power supply voltage Vcc4.

Thus, the charging IC 2 has a function as a step-down converter that steps down the USB voltage V_{USB} and a function as a step-up converter that steps up the power supply voltage V_{BAT}. A voltage input from the charging IC 2 to the step-up/down DC/DC converter 8 fluctuates depending on the function of the charging IC 2. However, even if there is such a fluctuation, the system power supply voltage Vcc1 (power including the system power supply voltage Vcc1) can be kept constant by the step-up/down DC/DC converter 8 selectively executing step-up and step-down. When a voltage of the system power supply voltage Vcc0 input to the input terminal VIN of the step-up/down DC/DC converter 8 is equal to 3.3V which is a voltage of the system power supply voltage Vcc1, the step-up/down DC/DC converter 8 does not execute step-up and step-down, and outputs the system power supply voltage Vcc0 as the system power supply voltage Vcc1 from the output terminal VOUT.

### (Protection Control)

In the inhaler 100, the temperature of the power supply BAT (hereinafter, referred to as a power supply temperature T_{BAT}) can be acquired based on a resistance value (output value) of the power supply thermistor T 1, the temperature of the heater HTR (hereinafter, referred to as a heater temperature T_{HTR}) can be acquired based on a resistance value (output value) of the heater thermistor T3, and the temperature of the case 110 (hereinafter, referred to as a case temperature T_{CASE}) can be acquired based on a resistance value (output value) of the case thermistor T4. When at least one of the power supply temperature T_{BAT}, the heater temperature T_{HTR}, and the case temperature T_{CASE} is in a state far away from a value under the recommended environment in which the inhaler 100 is used, the inhaler 100 is configured to execute a protection control for prohibiting the charging of the power supply BAT and the discharging from the power supply BAT to the heater HTR (hereinafter also referred to as charging and discharging), and thus safety is improved. This protection control is executed by the MCU 1 and the FF 17.

The protection control for prohibiting the charging and discharging means controlling the electronic component such that the charging and discharging are disabled. In order to disable the discharge from the power supply BAT to the heater HTR, a low-level signal may be input to the enable terminal EN of the step-up DC/DC converter 9 (or the potential of the enable terminal EN may be indefinite) to stop the step-up operation, and a low-level signal may be input to the gate terminal of the switch S6 (or the potential of the gate terminal may be indefinite) to interrupt the connection between a heater connector Cn (-) on the negative electrode side and the ground. Discharging from the power supply BAT to the heater HTR can also be disabled by performing only one of stopping the step-up operation of the step-up DC/DC converter 9 and interrupting the connection between the heater connector Cn (-) and the ground. In order to disable the charging of the power supply BAT, the charging operation of the charging IC 2 may be stopped by inputting a high-level signal to the charge enable terminal CE ( ) of the charging IC 2.

An example of prohibiting charging and discharging as protection control will be described below, but from the viewpoint of improving safety, the protection control may be control that prohibits only charging, or control that prohibits only discharging.

When the protection control is executed, the operation modes are preferably limited. Hereinafter, when the protection control is executed, the operation modes are limited. However, since the MCU 1 manages the operation modes, the operation modes may not be limited in a state where the MCU 1 is not operating for any reason

The protection control executed by the inhaler 100 includes a manual return protection control that can be terminated when the MCU 1 is reset by a user operation, an automatic return protection control that can be automatically terminated by improving the temperature environment without requiring the reset of the MCU 1, and a non-return protection control that cannot be terminated. The operation modes of the inhaler 100 include an error mode and a permanent error mode in addition to the operation modes described with reference to FIG. 9. In this specification, the expression "all operation modes of the inhaler" means all operation modes (all operation modes illustrated in FIG. 9) excluding the error mode and the permanent error mode.

When the manual return protection control or the automatic return protection control is executed, the inhaler 100 shifts to the error mode, and the shift to other operation modes is disabled. In the error mode, a state (a supply state of the system power supply voltage) of the power supply voltage in the immediately preceding operation mode is maintained. That is, in the error mode, a function (for example, acquisition of temperature information) that can be executed in the immediately preceding operation mode excluding charging and discharging can be executed. In the error mode, when the MCU 1 is reset, the manual return protection control is terminated. In the error mode, when the temperature environment is improved, the automatic return protection control is terminated. When the manual return protection control or the automatic return protection control is terminated, the restriction of the operation mode is released, and the operation mode shifts to the sleep mode. After that, the operation mode can be changed by the user operation or the like.

When the non-return protection control is executed, the inhaler 100 shifts to the permanent error mode. In the permanent error mode, all the functions of the inhaler 100 become unusable, and the inhaler 100 needs to be repaired or discarded.

The MCU 1 outputs a low-level signal from the terminal P14 to stop the step-up operation of the step-up DC/DC converter 9 and interrupt the connection between the heater connector Cn (-) on the negative electrode side and the ground, and outputs a high-level signal from the terminal P22 to stop the charging operation of the charging IC 2, thereby executing the protection control. When only charging is prohibited, there is no need to output a low-level signal from the terminal P14, and when only discharging is prohibited, there is no need to output a high-level signal from the terminal P22.

The FF 17 outputs a low-level signal from the Q terminal to stop the step-up operation of the step-up DC/DC converter 9, interrupt the connection between the heater connector Cn (-) on the negative electrode side and the ground, and stop the charging operation of the charging IC 2 by turning on the bipolar transistor S1, thereby executing the protection control without passing through the MCU 1.

When the signal input to the CLR ( ) terminal is switched from a high level to a low level, the FF 17 outputs the low-level signal from the Q terminal. The low-level signal is also input to a P10 terminal of the MCU 1. While the low-level signal is input to the terminal P10, the MCU 1 does not switch a signal input to a CLK terminal (not illustrated) of the FF 17 from a low level to a high level. In other words, while the low-level signal is input to the terminal P10, a CLK signal of the FF 17 does not rise. When the MCU 1 freezes, for example, the signal input to the CLK terminal (not illustrated) of the FF 17 remains at a low level. Therefore, regardless of whether the MCU 1 is operating normally or freezes, even when the signal input to the CLR ( ) terminal of the FF 17 is switched from a low level to a high level after the low-level signal is output from the Q terminal of the FF 17, the low-level signal continues to be output from the Q terminal of the FF 17. When the MCU 1 is reset as described with reference to FIG. 19, the FF 17 is restarted (the system power supply voltage Vcc2 is supplied again). Since the reset MCU 1 operates in the sleep mode, the system power supply voltage Vcc3 is not supplied to the heater thermistor T3 and the case thermistor T4, and an output of the operational amplifier OP2 and an output of the operational amplifier OP3 are both at a high level. Accordingly, a high-level signal is input to the D terminal and the CLR ( ) terminal of the FF 17. At this timing, since the low-level signal is not input to the terminal P10 by the restart of the FF 17, the MCU 1 causes the CLK signal of the FF 17 to rise. Accordingly, an output of the Q terminal of the FF 17 can be returned to a high level. When the output of the Q terminal of the FF 17 returns to a high level, the protection control by the FF 17 is terminated.

As described above, the signal output from the Q terminal of the FF 17 is also input to the terminal P10 of the MCU 1. Therefore, the MCU 1 can detect that the FF 17 has executed the protection control, based on the low-level signal input to the terminal P10. In response to detecting that the FF 17 has executed the protection control, the MCU 1 preferably causes the notification unit 180 to notify a reset request of the MCU 1 and shifts to the error mode.

### (Details of Reset of MCU 1)

When the operation mode shifts to the error mode by executing the manual return protection control, or when the MCU 1 does not operate normally for any reason (when the MCU 1 freezes), it is necessary to reset (restart) the MCU 1.

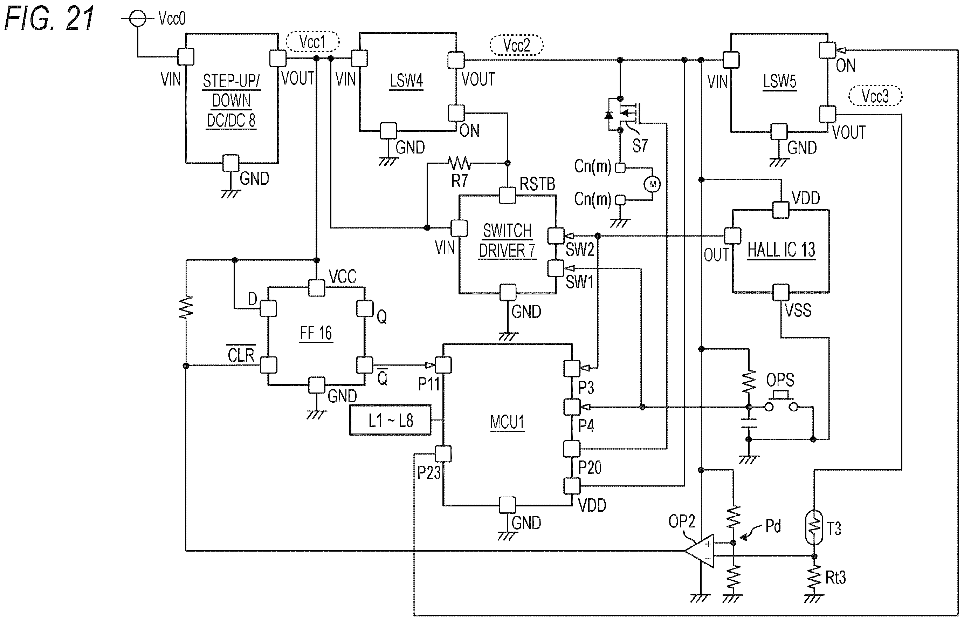

FIG. 21 is a circuit diagram of main parts of the electric circuit illustrated in FIG. 10 with main electronic components related to a reset operation of the MCU 1 extracted. In FIG. 21, motor connectors Cn (m) and the resistor R7, which are not denoted by the reference numerals in FIG. 10, are additionally illustrated. The vibration motor M is connected to the motor connectors Cn (m). The motor connectors Cn (m) are connected in parallel to the power supply terminal VDD of the MCU 1 via the switch S7. Therefore, when the supply of the system power supply voltage Vcc2 to the power supply terminal VDD of the MCU 1 is stopped, a supply of an operating voltage to the vibration motor M is also stopped. One end of the resistor R7 is connected to a node connecting the control terminal ON of the LSW4 and the reset input terminal RSTB of the switch driver 7, and the other end thereof is connected to the input terminal VIN of the switch driver 7.

The MCU 1 is reset by stopping the supply of the system power supply voltage Vcc2, which is the operating voltage of the MCU 1, to the power supply terminal VDD of the MCU 1 and then restarting the supply thereof. As illustrated in FIG. 20, the system power supply voltage Vcc2 is output from the output terminal VOUT of the LSW4 in a state where the LSW4 is closed (state where electrical connection between the input terminal VIN and the output terminal VOUT is closed). In other words, the system power supply voltage Vcc2 is not output from the output terminal VOUT of the LSW4 in a state where the LSW4 is opened (state where the electrical connection between the input terminal VIN and the output terminal VOUT is interrupted). Opening and closing of the LSW4 are controlled by the switch driver 7. Thus, in the inhaler 100, the switch driver 7 controls the opening and closing of the LSW 4, so that the MCU 1 can be reset.

The system power supply voltage Vcc1 is input to the input terminals VIN of the LSW4 and the switch driver 7. Therefore, in a state where the system power supply voltage Vcc1 is generated in the step-up/down DC/DC converter 8, the LSW4 and the switch driver 7 operate simultaneously. For example, a switch provided between the reset input terminal RSTB and the ground terminal GND is built in the switch driver 7. When this switch is closed, a potential of the reset input terminal RSTB is at a ground level (low level). The input terminal VIN and the reset input terminal RSTB of the switch driver 7 are connected in parallel via the resistor R7. Therefore, as long as the system power supply voltage Vcc1 is generated in the step-up/down DC/DC converter 8, the potential of the reset input terminal RSTB is at a high level in a state where the switch built in the switch driver 7 is opened. The control terminal ON for controlling the opening and closing of the LSW4 is connected to the output terminal VOUT of the step-up/down DC/DC converter 8 via the resistor R7 and connected to the reset input terminal RSTB of the switch driver 7. Therefore, in the state where the switch built in the switch driver 7 is opened, a high-level voltage based on the system power supply voltage Vcc1 is input to the control terminal ON of the LSW4. On the other hand, in a state where the switch built in the switch driver 7 is closed, one end of the resistor R7 is connected to the ground, and thus a high-level signal based on the system power supply voltage Vcc1 is not input to the control terminal ON of the LSW 4, and a signal input to the control terminal ON of the LSW 4 is at a low level. Thus, the switch driver 7 controls opening and closing of the LSW4 by controlling the potential of the reset input terminal RSTB.

The switch driver 7 controls the potential of the reset input terminal RSTB based on a voltage input to the terminal SW1 and a voltage input to the terminal SW2. The voltage input to the terminal SW1 is at a low level (ground level) in a state where the operation switch OPS is pressed, and is at a high level in a state where the operation switch OPS is not pressed. The voltage input to the terminal SW2 is at a low level in a state where the outer panel 115 is detached from the inner panel 118, and is at a high level in a state where the outer panel 115 is attached to the inner panel 118.

When a panel condition that the outer panel 115 is detached from the inner panel 118 is satisfied and a switch operation condition that pressing of the operation switch OPS continues for a predetermined time (hereinafter, referred to as a reset operation time) is satisfied, the switch driver 7 starts a reset process for resetting the MCU 1. A state where the panel condition and the switch operation condition are both satisfied is defined as a state where a restart condition is satisfied. After the panel condition and the switch operation condition are both satisfied, a state where the pressing of the operation switch OPS is continued is defined as a state where the restart condition is continuously satisfied.

The reset process refers to a process of waiting for a predetermined delay time td equal to or longer than 0 seconds, then closing the switch built in the switch driver 7 and controlling the LSW 4 to be in an open state, and thereafter opening the switch and returning the LSW 4 to a closed state when a time during which the switch is closed reaches a predetermined time. When the panel condition is no longer satisfied or when the user stops pressing the operation switch OPS while waiting for the elapse of the reset operation time after the start of pressing the operation switch OPS in the state where the panel condition is satisfied, the switch driver 7 returns to a standby state without executing the reset process. After starting the reset process, the switch driver 7 opens the built-in switch at the time when the time during which the built-in switch is closed reaches the predetermined time regardless of whether the restart condition is satisfied, and terminates the reset process. In other words, even when the panel condition is satisfied and the restart condition is continuously satisfied by continuing the pressing of the operation switch OPS until the time during which the switch built in the switch driver 7 is closed reaches the predetermined time, the switch driver 7 opens the built-in switch and returns the LSW 4 to the closed state.

The above-described reset operation time is preferably set to a value different from a pressing duration time (hereinafter, referred to as a heating start operation time) of the operation switch OPS required for shifting from the active mode to the heating setting mode (for instructing the start of heating of the rod 500 by the heater HTR). In this way, in order to reset the MCU 1, an operation different from an operation for executing aerosol generation, which needs to be frequently performed, is required. Therefore, the MCU 1 can be reset under a clear intention of the user. The reset operation time is more preferably longer than the heating start operation time. In this way, the MCU 1 can be reset under a clearer intention of the user.

For example, the heating start operation time is 1 second, and the reset operation time is 5 seconds. The numerical values are merely examples and are not limited thereto.

If the MCU 1 does not freeze, when the reset process is started by the switch driver 7 (in other words, when the restart condition is satisfied), the MCU 1 preferably controls the notification unit 180 (the vibration motor M and the LEDs L1 to L8) to cause the notification unit 180 to notify the user. As a notification method, LEDs L1 to L8 may be lit in a predetermined pattern, the vibration motor M may be vibrated, or a combination thereof may be used. Based on this notification, the user can recognize that the MCU 1 is reset by continuing a current operation. The MCU 1 may notify this notification or a notification different from this notification while waiting for the elapse of the reset operation time.

When the delay time td is set to a value larger than 0, the MCU 1 preferably completes the above notification by the notification unit 180 accompanying the start of the reset process before the delay time td elapses. In this way, the user can recognize that the reset of the MCU 1 is about to be started due to the completion of the notification. It is needless to say that the notification by the notification unit 180 may be continued until the delay time td elapses. Even in this case, since the vibration motor M is operated with the system power supply voltage Vcc2, the notification is completed at the same time when the supply of the system power supply voltage Vcc2 to the MCU 1 is stopped, and it becomes possible to recognize that the reset of MCU 1 is started.

A situation is considered in which, for example, the heater HTR is overheated as a result of the freeze of the MCU 1.

As described above, when the temperature of the heater HTR (temperature of the heater thermistor T3) is excessively high, the output voltage of the operational amplifier OP2 is at a low level. The low-level voltage is input to the CLR ( ) terminal of the FF 16. When the signal input to the CLR ( ) terminal is at a low level, the FF 16 sets an output of the Q terminal to a low level. The Q ( ) terminal of the FF 16 is a terminal that outputs a voltage obtained by inverting the output of the Q terminal of the FF 16. Therefore, when the signal input to the CLR ( ) terminal is at a low level, the FF 16 outputs a high-level signal from the Q ( ) terminal. In a normal state where the temperature of the heater HTR (temperature of the heater thermistor T3) is not excessively high, the signal input to the CLR ( ) terminal of the FF 16 is at a high level. Therefore, in the normal state, the FF 16 outputs, from the Q ( ) terminal, a low-level voltage obtained by inverting the high-level voltage (system power supply voltage Vcc1) input to the D terminal.

It is assumed that the MCU 1 freezes due to noise. When the MCU 1 freezes, the user detaches the outer panel 115 from the inner panel 118 and continues pressing the operation switch OPS, so that the MCU 1 is reset. While the MCU 1 is reset, the system power supply voltage Vcc1 is continuously supplied to the power supply terminal VCC of the FF 16. Therefore, before and after the reset of the MCU 1, the FF 16 continues to hold information (high-level output from the Q ( ) terminal) indicating that the temperature of the heater HTR is excessively high.

When a voltage input to the terminal P11 is at a high level, the restarted MCU 1 detects that the temperature of the heater HTR is excessively high, executes a protection control, and shifts the operation mode to the permanent error mode. That is, the protection control executed here is the non-return protection control. Thus, as a result of freeze of the MCU 1, even when overheating of the heater HTR occurs, the MCU 1 can be returned to a normal operation by the reset, and the operation mode can be shifted to the permanent error mode. Accordingly, the inhaler 100 can be disabled, and safety can be improved.

As described above, in the inhaler 100, when both the switch operation condition which is a condition relating to the operation of the operation switch OPS and the panel condition which is a condition different from the operation of the operation switch OPS are satisfied, the switch driver 7 opens and closes the LSW4 to reset the MCU 1. A technique for resetting a controller when a single condition is satisfied is well known. However, in the inhaler 100, the MCU 1 is reset when a plurality of conditions are satisfied. Therefore, it is possible to prevent the MCU 1 from being reset by an erroneous operation or several impact, and to reset the MCU 1 only when necessary.

In the inhaler 100, in a state where the outer panel 115 is attached to the inner panel 118, even when the operation switch OPS is continuously pressed, the MCU 1 is not reset. Only in a state where the outer panel 115 is detached from the inner panel 118, the MCU 1 is reset by continuously pressing the operation switch OPS. Thus, by switching the function that can be realized by the same operating member according to whether the outer panel 115 is attached, the number of operating members can be reduced, the operability can be improved, and cost can be reduced.

In response to detecting that the outer panel 115 is detached from the inner panel 118, the MCU 1 preferably causes the notification unit 180 to perform notification. In this way, in order to reset the MCU 1, it is necessary to further operate the operation switch OPS while being notified that the panel condition is satisfied. Therefore, the MCU 1 can be reset under a clear intention of the user.

In response to detecting that the outer panel 115 is detached from the inner panel 118, the MCU 1 preferably disables discharge from the power supply BAT to the heater HTR. In a state where the outer panel 115 is not attached, the heat generated by the heating unit 170 is easily transmitted to the user, and thus safety can be improved.

### (Preferred Embodiment of Heating Unit 170)

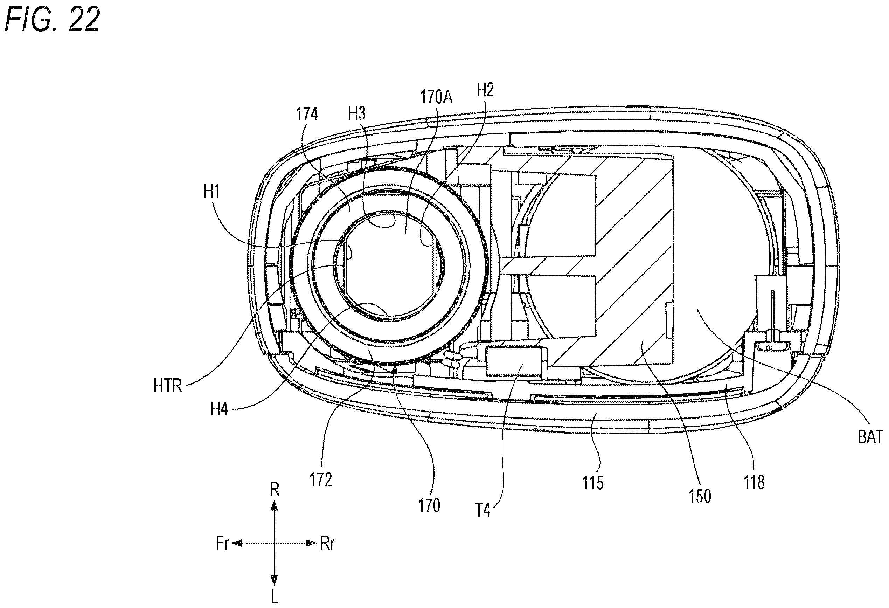

FIG. 22 is a cross-sectional view taken along a section passing through the case thermistor T4 of the inhaler 100 illustrated in FIG. 1. As illustrated in FIG. 22, the heating unit 170 includes a cylindrical rod accommodating unit 172 having a heat insulating function, a cylindrical heater supporting member 174 disposed inside the rod accommodating unit 172, and a cylindrical heater HTR supported on an inner circumferential surface of the heater supporting member 174.

The heater HTR has a substantially elliptical cross-sectional shape perpendicular to the up-down direction. Specifically, the heater HTR includes flat portions H1 and H2 extending in the up-down direction and spaced apart from each other in the front-rear direction, a curved portion H3 connecting a right end of the flat portion H1 and a right end of the flat portion H2, and a curved portion H4 connecting a left end of the flat portion H1 and a left end of the flat portion H2. A substantially elliptical shape may be formed by using a curved portion having a curvature different from that of the curved portions H3 and H4 instead of the flat portions H1 and H2.

A portion of the rod 500 is accommodated in a space 170A surrounded by the elliptical heater HTR. An outer shape of the rod 500 is circular, and a diameter of the rod 500 is larger than a distance between the flat portion H1 and the flat portion H2 in the front-rear direction. Therefore, the rod 500 inserted into the space 170A is crushed in the front-rear direction by the flat portion H1 and the flat portion H2. By configuring the heating unit 170 as illustrated in FIG. 21, a contact area between the rod 500 and the heater HTR can be increased, and the rod 500 can be efficiently heated. The MCU 1 can be reset regardless of whether the rod 500 is inserted into the space 170A.

For example, assume that the MCU 1 freezes before the rod 500 inserted from the opening 132 (see FIG. 2) is heated, and no aerosol is generated. In such a case, the MCU 1 can be reset only by removing the outer panel 115 and pressing the operation switch OPS while the rod 500 is inserted without performing an operation such as removing the rod 500 from the opening 132 and closing the slider 119. After the MCU 1 returns to the active mode by resetting, the user attaches the outer panel 115 and presses the operation switch OPS for the heating start operation time. As a result, the aerosol generation that was not executed will be executed. As described above, the MCU 1 can be reset without inserting and removing the rod 500, in other words, without opening and closing the slider 119, so that burden on the user can be reduced and the usability can be improved.

Although various embodiments have been described above with reference to the drawings, it is needless to say that the invention is not limited thereto. It is apparent to those skilled in the art that various modifications or corrections can be conceived within the scope described in the claims, and it is understood that the modifications or corrections naturally fall within the technical scope of the invention.

In the present description, at least the following matters are described. In parentheses, corresponding constituent components and the like in the above-mentioned embodiment are indicated, but the invention is not limited thereto.
(1) A power supply unit of an aerosol generation device, comprising:
   a power supply (power supply BAT);
   a heater connector (heater connector Cn) to which a heater (heater HTR) configured to heat an aerosol source (rod 500) by consuming power supplied from the power supply is connected;
   a controller (MCU 1) configured to control supply of power from the power supply to the heater and including a power supply terminal (power supply terminal VDD) to which power for operation is input;
   a restart circuit (switch driver 7) configured to restart the controller; and
   an IC (FF16) including the power supply terminal (power supply terminal VCC) to which the power for operation is input and that is separated from the controller, in which
   the power supply terminal of the controller is configured to be supplied with a second system voltage (system power supply voltage Vcc2) generated from the power supply, and
   the power supply terminal of the IC is supplied with a first system voltage (system power supply voltage Vcc1) generated from the power supply even while the controller is restarted by the restart circuit.

According to (1), even when the controller is restarted, the IC can fulfill a function thereof. Therefore, compared to a case where the power supply to the IC is cut off during the restart of the controller, the aerosol generation device can be made higher in functionality.

(2) The power supply unit of an aerosol generation device according to (1), in which
the second system voltage is generated from the first system voltage.

According to (2), the second system voltage (system power supply voltage Vcc2) for the restart of the controller and the first system voltage (system power supply voltage Vcc1) which continues to be activated even during the restart can be realized with a simple circuit configuration. Therefore, a cost and size of the aerosol generation device can be reduced.

(3) The power supply unit of an aerosol generation device according to (2), in which
a voltage value of the second system voltage is equal to a voltage value of the first system voltage.

According to (3), the second system voltage (system power supply voltage Vcc2) for the restart of the controller and the first system voltage (system power supply voltage Vcc1) which continues to be activated even during the restart can be realized with a simple circuit configuration. Therefore, a cost and size of the aerosol generation device can be reduced.

(4) The power supply unit of an aerosol generation device according to (2) or (3), further comprising:
a switch (LSW4) including an input terminal (input terminal VIN), an output terminal (output terminal VOUT) connected to a power supply terminal of the controller and configured to output the second system voltage, and a control terminal (control terminal ON), in which
the switch is configured to close electrical connection between the input terminal of the switch and the output terminal of the switch when a high-level voltage is input to the control terminal of the switch, and
the first system voltage is input to the input terminal and the control terminal.

According to (4), when the first system voltage is input to the control terminal of the switch, the electrical connection between the input terminal and the output terminal of the switch is closed, and the second system voltage is output from the output terminal of the switch. Therefore, the second system voltage (system power supply voltage Vcc2) for the restart of the controller can be generated with a simple circuit configuration from the first system voltage (system power supply voltage Vcc1) which continues to be activated even during the restart.

(5) The power supply unit of an aerosol generation device according to (4), in which
the restart circuit is configured to input a low-level signal to the control terminal of the switch.

According to (5), the restart circuit can temporarily disable the second system voltage while realizing two system voltages with a simple circuit configuration. Therefore, it is possible to restart the controller while reducing the cost and size of the aerosol generation device.

(6) The power supply unit of an aerosol generation device according to any one of (1) to (5), further comprising:
a storage IC (FF16) configured to store input information, in which
the IC includes the storage IC.

According to (6), since the storage IC can hold a value before and after the restart of the controller, compared to a case where the storage IC cannot hold the value before and after the restart of the controller, the aerosol generation device can be made higher in functionality.

(7) The power supply unit of an aerosol generation device according to (6), in which
the controller restarted by the restart circuit is configured to execute a predetermined function based on the information stored in the storage IC.

According to (7), even when the controller does not operate normally at the time when the storage IC holds information, the controller after the restart can acquire the information. Therefore, the function can be reliably executed based on this information, and the aerosol generation device can be made high in functionality.

(8) The power supply unit of an aerosol generation device according to (7), in which
the predetermined function is permanent prohibition of at least one of charging of the power supply and discharging of the power supply to the heater.

In a situation where the restart of the controller is required, it is likely that at least one of the discharging and charging needs to be permanently prohibited. It would be nice if the controller could detect such a situation and permanently prohibit at least one of the discharging and charging, but if the controller freezes, this cannot be done. According to (8), the restarted controller permanently prohibits at least one of the discharging and charging based on the information stored in the storage IC during the freeze. Therefore, even when the controller is not operating normally, while the controller is restarted and returned to normal, at least one of the discharging and charging is prohibited based on the information stored in the storage IC, and safety of the aerosol generation device can be improved.

(9) The power supply unit of an aerosol generation device according to any one of (1) to (8), further comprising:
a voltage conversion circuit configured to generate the first system voltage by converting a voltage supplied from the power supply.

According to (9), since the first system voltage can be stabilized by the voltage conversion circuit, an operation of the IC that operates based on the first system voltage can be stabilized.

(10) The power supply unit of an aerosol generation device according to (9), in which
the voltage conversion circuit includes a step-up/down DC/DC converter (step-up/down DC/DC converter 8).

According to (10), even when an output voltage of the power supply fluctuates greatly, the first system voltage can be stabilized, and thus the operation of the IC that operates based on the first system voltage can be stabilized.

(11) The power supply unit of an aerosol generation device according to (10), further comprising:
a receptacle (receptacle RCP) electrically connected to an external power supply, in which
the voltage conversion circuit is configured to convert a voltage supplied from the receptacle to generate the first system voltage.

According to (11), the first system voltage can be generated from the external power supply, and the aerosol generation device can be recovered even when the power supply falls into an over-discharge state.

Although various embodiments have been described above with reference to the drawings, it is needless to say that the invention is not limited thereto. It is apparent to those skilled in the art that various modifications or corrections can be conceived within the scope described in the claims, and it is understood that the modifications or corrections naturally fall within the technical scope of the invention. In addition, respective constituent elements in the above embodiment may be optionally combined without departing from the gist of the invention.

The present application is based on the Japanese patent application (Japanese Patent Application No. 2021-079906) filed on May 10, 2021, and contents thereof are incorporated herein by reference.

### REFERENCE SIGNS LIST

100 inhaler
112 case body
115 outer panel
118 inner panel
119 slider
170 heating unit
1 MCU
8 step-up/down DC/DC converter
16 flip-flop
HTR heater
BAT power supply
Cn heater connector
Cn (m) motor connector
OPS operation switch
M vibration motor

## Claims

1. A power supply unit of an aerosol generation device, comprising:
a power supply;
a heater connector to which a heater configured to heat an aerosol source by consuming power supplied from the power supply is connected;
a controller configured to control supply of power from the power supply to the heater and including a power supply terminal to which power for operation is input;
a restart circuit configured to restart the controller; and
an IC including the power supply terminal to which the power for operation is input and that is separated from the controller, wherein
the power supply terminal of the controller is configured to be supplied with a second system voltage generated from the power supply, and
the power supply terminal of the IC is supplied with a first system voltage generated from the power supply even while the controller is restarted by the restart circuit.

2. The power supply unit of an aerosol generation device according to claim 1, wherein
the second system voltage is generated from the first system voltage.

3. The power supply unit of an aerosol generation device according to claim 2, wherein
a voltage value of the second system voltage is equal to a voltage value of the first system voltage.

4. The power supply unit of an aerosol generation device according to claim 2 or 3, further comprising:
a switch including an input terminal, an output terminal connected to a power supply terminal of the controller and configured to output the second system voltage, and a control terminal, wherein
the switch is configured to close electrical connection between the input terminal of the switch and the output terminal of the switch when a high-level voltage is input to the control terminal of the switch, and
the first system voltage is input to the input terminal and the control terminal.

5. The power supply unit of an aerosol generation device according to claim 4, wherein
the restart circuit is configured to input a low-level signal to the control terminal of the switch.

6. The power supply unit of an aerosol generation device according to any one of claims 1 to 5, further comprising:
a storage IC configured to store input information, wherein
the IC includes the storage IC.

7. The power supply unit of an aerosol generation device according to claim 6, wherein
the controller restarted by the restart circuit is configured to execute a predetermined function based on the information stored in the storage IC.

8. The power supply unit of an aerosol generation device according to claim 7, wherein
the predetermined function is permanent prohibition of at least one of charging of the power supply and discharging of the power supply to the heater.

9. The power supply unit of an aerosol generation device according to any one of claims 1 to 8, further comprising:
a voltage conversion circuit configured to generate the first system voltage by converting a voltage supplied from the power supply.

10. The power supply unit of an aerosol generation device according to claim 9, wherein
the voltage conversion circuit includes a step-up/down DC/DC converter.

11. The power supply unit of an aerosol generation device according to claim 10, further comprising:
a receptacle electrically connected to an external power supply, wherein
the voltage conversion circuit is configured to convert a voltage supplied from the receptacle to generate the first system voltage.
